# EUROPEAN PATENT SPECIFICATION

(11) **EP 4 271 139 B1**
(45) Date of publication and mention of the grant of the patent: **25.02.2026**
(21) Application number: 22170549.4
(22) Date of filing: 28.04.2022
(51) Int. Cl.: H05B 47/12, H05B 47/115, H05B 47/19, H05B 47/175

(54) **LIGHTING CONTROL**
LICHTSTEUERUNG
CONTRÔLE D'ÉCLAIRAGE

(43) Date of publication of application: 01.11.2023
(73) Proprietor: Helvar Oy Ab, 02150 Espoo (FI)
(72) Inventor: JUSLÉN, Henri, 02150 ESPOO (FI); KOSZORU, Kristóf, 02150 ESPOO (FI); KALLAS, Juha, 02150 ESPOO (FI)
(74) Representative: Berggren Oy

(56) References cited:
- WO-A2-2016/050676
- US-B1- 8 909 382

## Description

### TECHNICAL FIELD

The present invention relates to control of light output of luminaires operating as part of a lighting system based on sensor data captured in the space the luminaires serve to illuminate.

### BACKGROUND

Many lighting systems applied for illuminating an indoor space and/or an outdoor space rely on at least partially autonomous control of at least some aspects of luminaries illuminating a space based on environmental characteristics determined via usage of one or more sensors provided in the space. Typical, but non-limiting, examples of sensors applicable for at least partially controlling the light output from luminaires of a lighting system include an occupancy sensor and a light sensor: while occupancy sensors may be applied to switch on (and keep on) lights in response to detecting occupancy in the space and to switch off (and keep off) lights in response to detecting non-occupancy in the space, whereas light sensors may be applied to control the light output in view of the ambient light in the space such that a desired overall light level is provided. Hence, occupancy sensors and light sensors enable at least partially autonomous lighting control that ensures user comfort while minimizing energy consumption.

In one approach the illuminated space is provided with one or more sensor units that report respective sensor data captured therein to a control entity, which makes use of the sensor data to control at least some aspects of respective light outputs of luminaires applied for illuminating the space, whereas in another approach luminaires applied for illuminating the space are provided with respective sensor units and each luminaire may apply the sensor data captured locally by the sensor unit provided therein to control at least some aspects of its light output.

As a particular example, such at least partially autonomous lighting control may be applied to provide relatively energy-efficient operation that still ensures user comfort in terms of sufficient lighting via switching on and off respective light outputs of the luminaires applied for illuminating the space in accordance with occupancy sensor data captured by sensor units operating in the illuminated space by providing illumination when the space is occupied and by keeping the space unilluminated when nobody is present. In such lighting systems, occupancy in the space is predominantly detected via application of motion sensors such as passive infrared (PIR) sensors that provide a reliable and affordable approach for occupancy detection. However, motion-based occupancy detection has rather obvious limitations, especially in large spaces with relatively sparse network of PIR sensors and, consequently, advanced solutions for occupancy detection for improved user comfort without sacrificing energy-efficiency are highly desirable.

In related art, WO 2016/050676 A2 discloses lighting units, systems, and methods for determining whether occupancy detections are legitimate or not. Methods and systems are further described for powering down a network of power over ethernet (PoE) components.

Further in related art, US 8,909,382 B1 discloses an occupancy detection system that includes a motion detector, one or more sound detectors and a lighting controller configured to turn on and off one or more lighting devices in a defined area based on detected occupancy states. Lighting control circuitry determines occupancy states based on motion detector output signals and sound detector output signals, and further controls associated lighting devices to be turned ON or OFF in accordance with determined occupancy states and an automatically adaptable timeout period. The timeout period is automatically adjusted in accordance with newly recorded time stamps for lighting status changes, based on a second order occupancy distribution analysis such as a Gaussian probability distribution function, with an occupancy curve adjusted for each newly recorded set of time stamps and the timeout period being adjusted according to the mean and variance of the occupancy curve.

### SUMMARY

It is an object of the present invention to provide an approach for detecting an occupancy or lack thereof in a space illuminated by a plurality of luminaires in a robust and reliable manner.

According to an example embodiment, a sensor unit is provided, the sensor unit comprising: a sensor portion comprising a sound sensor arranged to capture a sound sensor signal that represents sounds in a space illuminated by a plurality of luminaires; a sensor control portion arranged to derive, based on the sound sensor signal, one or more sound parameters, where each sound parameter is descriptive of a respective sound characteristics in said space; and a learning portion arranged to: receive, from the plurality of luminaires and/or from motion sensor apparatuses arranged in said space, respective remote occupancy state indications that are descriptive of motion in respective locations of said space, store history data including a history of the one or more sound parameters and respective histories of the occupancy state indications, and carry out a learning procedure to determine, based on the history data, an occupancy estimation model that is applicable for deriving an occupancy likelihood coefficient based on the one or more sound parameters, where the occupancy likelihood coefficient is descriptive of a likelihood of occupancy in at least one location of said space, wherein the sensor control portion is arranged to apply the determined occupancy estimation model to derive the occupancy likelihood coefficient based on the one or more sound parameters and to carry out one of the following: control at least one aspect of respective light output of at least one luminaire of the plurality of luminaires in accordance with the derived occupancy likelihood coefficient, or transmit lighting control information including the derived occupancy likelihood coefficient to the at least one luminaire for adjusting at least one aspect of the respective light output of the at least one luminaire.

According to an illustrative example provided in the present disclosure, a luminaire is provided, the luminaire comprising: a sensor portion comprising a motion sensor arranged to provide a motion sensor signal that is descriptive of motion at a location of the space illuminated by the luminaire; a luminaire control portion arranged to: derive local occupancy state indications based on the motion sensor signal, where the local occupancy state indications indicate one of occupancy or non-occupancy, and control light output of the luminaire according to a preprogrammed lighting control logic in dependence of the local occupancy state indications, where the lighting control logic defines switching or keeping on the light output at a predefined target light intensity as a response to occupancy and adjusting the light output to a predefined stand-by light intensity in accordance with a predefined dimming curve as a response to a change from occupancy to non-occupancy; and an adaptation portion arranged to: obtain respective one or more occupancy likelihood coefficients that are descriptive of a likelihood of occupancy in respective locations of said space, and control at least one aspect of the light output of the luminaire further in dependence of the one or more occupancy likelihood coefficients.

According to another example embodiment, a method is provided, the method comprising: deriving, based on a sound sensor signal that represents sounds in a space illuminated by a plurality of luminaires, one or more sound parameters, where each sound parameter is descriptive of a respective sound characteristics in said space; receiving, from the plurality of luminaires and/or from motion sensor apparatuses arranged in said space, respective remote occupancy state indications that are descriptive of motion in respective locations of said space; storing history data including a history of the one or more sound parameters and respective histories of the occupancy state indications; carrying out a learning procedure to determine, based on the history data, an occupancy estimation model that is applicable for deriving an occupancy likelihood coefficient based on the one or more sound parameters, where the occupancy likelihood coefficient is descriptive of a likelihood of occupancy in at least one location of said space; and applying the determined occupancy estimation model to derive the occupancy likelihood coefficient based on the one or more sound parameters and carrying out one of the following: controlling at least one aspect of respective light output of at least one luminaire of the plurality of luminaires in accordance with the derived occupancy likelihood coefficient, or transmitting lighting control information including the derived occupancy likelihood coefficient to the at least one luminaire for adjusting at least one aspect of the respective light output of the at least one luminaire.

According to another example embodiment, a computer program is provided, the computer program comprising computer readable program code configured to cause performing at least a method according to an example embodiment described in the foregoing when said program code is executed on one or more computing apparatuses.

The computer program according to the above-described example embodiment may be embodied on a volatile or a non-volatile computerreadable record medium, for example as a computer program product comprising at least one computer readable non-transitory medium having the program code stored thereon, which, when executed by one or more computing apparatuses, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following examples may be used in combinations other than those explicitly described, unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some components of a luminaire according to an example;
Figure 3 illustrates a block diagram of some components of a sensor unit according to an example;
Figure 4 illustrates a block diagram of some logical components of a lighting system according to an example;
Figure 5 illustrates a block diagram of some components of a luminaire according to an example;
Figure 6A illustrates a method according to an example;
Figure 6B illustrates a method according to an example; and
Figure 7 illustrates a block diagram of some components of an apparatus according to an example.

### DESCRIPTION OF SOME EMBODIMENTS

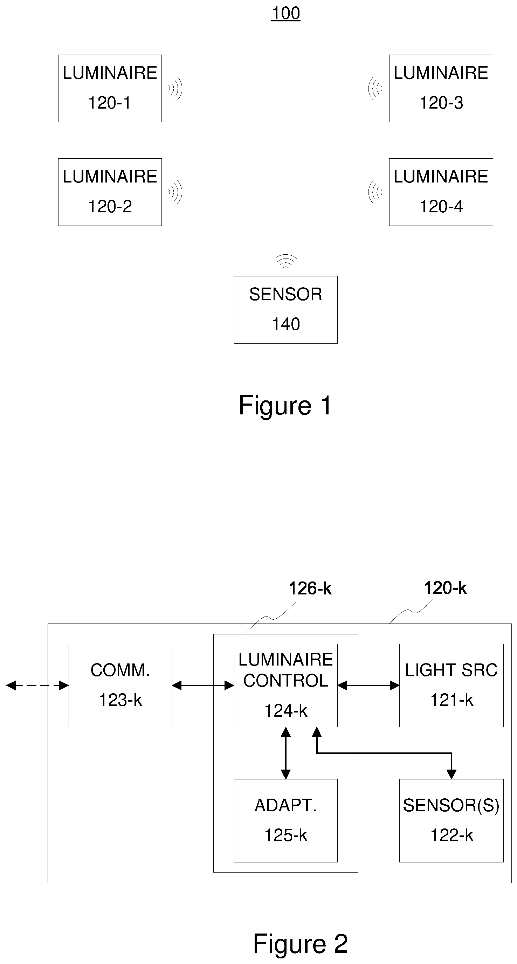

Figure 1 illustrates a block diagram of some components of a lighting system 100 according to an example. The lighting system 100 may be arranged for illuminating a space or area, which may comprise e.g. one or more indoor spaces or areas. In the example of Figure 1 the lighting system 100 is shown with luminaires 120-1, 120-2, 120-3 and 120-4 for illuminating a space or area and a sensor unit 140. The luminaires 120-1 to 120-4 represent a plurality of luminaires 120, whereas any individual luminaire may be referred to via a reference number 120-k. The plurality of luminaires 120 may be arranged for illuminating respective locations of the space, whereas the sensor unit 140 may be arranger for observing one or more environmental characteristics in respective locations of the space illuminated by the plurality of luminaires 120. It is worth noting that the example of Figure 1 serves to illustrate the plurality of luminaires 120 and the sensor unit 140 as respective operational elements of the lighting system 100, while on the other hand the illustration of Figure 1 does not serve to illustrate any physical characteristics of these elements of the lighting system 100 and/or any aspects of spatial relationship between these elements of the lighting system 100.

The plurality of luminaires 120 and the sensor unit 140 may be communicatively coupled to each other via respective wireless communication links or via a wireless communication network provided using a suitable wireless communication technique known in the art, each of the plurality of luminaires 120 and the sensor unit 140 hence serving as a respective node of a lighting control network. The lighting system 100 may include one or more further luminaires in addition to the plurality of luminaires described herein and/or the one or more further sensor units in addition to the sensor unit 140 described herein, which may be likewise connected to each other, to the plurality of luminaires 120 and to the sensor unit 140 via the lighting control network.

Figure 2 illustrates a block diagram of some (logical) components of a luminaire 120-k according to an example. In the following, various characteristic of structure and operation of any of the plurality of luminaires 120 are described via references to the single luminaire 120-k, whereas these characteristics pertain to each of the plurality of luminaries 120, unless explicitly described otherwise. The luminaire 120-k may comprise at least one light source 121-k for providing light output of the luminaire 120-k, a sensor portion 122-k for observing one or more environmental characteristics at a location illuminated by the luminaire 120-k, a communication portion 123-k for wireless communication with other elements of the lighting control network, a luminaire control portion 124-k for controlling at least one aspect of operation of the luminaire 120-k and an adaptation portion 125-k for adjusting operation of the control portion 124-k in accordance with one or more characteristics of operating environment of the luminaire 120-k. The luminaire control portion 124-k and the adaptation portion 125-k may constitute, at least conceptually, a luminaire control apparatus 126-k.

According to an example, the at least one light source 121-k may comprise one or more light emitting diodes (LEDs) and the luminaire control portion 124-k may comprise or it may be provided as a LED driver device, whereas in another non-limiting example the at least one light source 121-k may comprise one or more fluorescent lamps and the luminaire control portion 124-k may comprise or it may be provided as an electronic ballast.

The sensor portion 122-k may comprise one or more sensors arranged to observe respective environmental characteristics at the location of the luminaire 120-k. The one or more sensors of the sensor portion 122-k may be communicatively coupled, e.g. via respective electrical wires, to the luminaire control portion 124-k in order to provide respective sensor signals thereto. The one or more sensors of the sensor portion 122-k comprises at least a motion sensor for monitoring occupancy at the location of the luminaire 120-k, e.g. a passive infrared (PIR) sensor, a microwave radar or a lidar. The sensor portion 122-k may comprise one or more further sensors, such as a light sensor for measuring ambient light level at the location of the luminaire 120-k, e.g. a photodetector such as a photodiode.

The sensor data conveyed via the sensor signals from the sensor portion 122-k to the luminaire control portion 124-k may be referred to as local sensor data due to its local availability in the luminaire 120-k, whereas the local sensor data or a portion thereof may be applied by the luminaire control portion 124-k for controlling at least some aspects of the light output of the luminaire 120-k.

Along the lines described in the foregoing, the communication portion 123-k may enable wireless communication with other elements of the lighting control network. In this regard, the communication portion 123-k may comprise a respective communication apparatus, e.g. a wireless transceiver, that is capable of communicating with respective communication apparatuses provided in other elements of the lighting control network using one or more predefined wireless communication techniques or protocols. The wireless communication may be carried out via using a suitable short-range wireless communication technique known in the art that enables communication over ranges from a few meters up to a few hundred meters. Examples of suitable short-range wireless communication techniques include Bluetooth, Bluetooth Low-Energy (BLE), ZigBee, WLAN/Wi-Fi according to an IEEE 802.11 family of standards, etc. The choice of the wireless communication technique and network topology applied for a specific implementation of the lighting control network may depend e.g. on the required communication range and/or requirements with respect to energy-efficiency of the communication apparatuses.

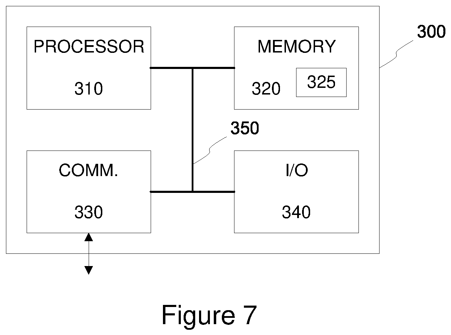

The luminaire control portion 124-k may control one or more aspects of light output provided via operation of the at least one light source 121-k in accordance with the local sensor data obtained from the sensor portion 122-k and/or in accordance with status information received via the communication portion 123-k from one or more other luminaires of the lighting system 100. In an example, the luminaire 120-k may comprise an apparatus comprising a processor and a memory, where the memory is arranged to store computer program code that, when executed by the processor, causes the apparatus to operate as the luminaire control apparatus 126-k, thereby providing respective operations of the luminaire control portion 124-k and the adaptation portion 125-k according to the present disclosure. More detailed examples of using the processor and the memory for implementing the luminaire control portion 124-k are described later in this text with references to Figure 7.

The luminaire 120-k or an element thereof may have a device ID, e.g. an address, a serial number, a name, etc. assigned thereto. The device ID assigned to the luminaire 120-k may be referred to as a luminaire ID of the luminaire 120-k. The luminaire ID may be stored, for example, in the memory provided in the luminaire 120-k and it may be applied, for example, to identify the respective luminaire 120-k in communication between elements of the lighting control network.

Along the lines described in the foregoing, the luminaire control portion 124-k may control one or more aspects of light output provided via operation of the at least one light source 121-k in accordance with the local sensor data obtained from the sensor portion 122-k. In the course of its operation, the luminaire control portion 124-k may record or derive sensor indications based on respective sensor signals received from the sensor portion 122-k, which may be referred to as local sensor indications since they are based on sensor data captured locally at the luminaire 120-k. The luminaire control portion 124-k may arrange the local sensor indications into a respective time series of local sensor indications. Examples in this regard include deriving local occupancy state indications (i.e. respective indications of one of occupancy or non-occupancy) based on a motion sensor signal received from a motion sensor of the sensor portion 122-k and/or deriving local light level indications based on a light sensor signal received from a light sensor of the sensor portion 122-k. Consequently, the light output of luminaire 120-k may be controlled based at least in part on one or more time series of local sensor indications, e.g. on a time series of local occupancy state indications and/or on a time series of local light level indications.

The luminaire control portion 124-k may apply a preprogrammed lighting control logic that defines controlling the light output of the luminaire 120-k in accordance with the sensor data obtained from the sensor portion 122-k. As an example, the preprogrammed lighting control logic may define switching on the light output of the luminaire 120-k as a response to the local sensor data indicating occupancy (after a period of non-occupancy) and define switching off the light output of the luminaire 120-k as a response to the local sensor data indicating non-occupancy (after a period of occupancy). In this regard, the preprogrammed lighting control logic may include one or more predefined lighting control rules, where each lighting control rule may define a respective pair of a triggering condition and a lighting control action to be carried out as a response to an occurrence of the triggering condition, where the triggering condition may directly or indirectly pertain to one or more time series of local sensor indications. As a non-limiting example, the preprogrammed lighting control logic may define one or more of the following lighting control rules:
- a first lighting control rule that defines switching on the light output of the luminaire 120-k to a predefined target light intensity or otherwise adjusting the light output of the luminaire 120-k from a lower light intensity to the predefined target light intensity as a response to the time series of local occupancy state indications indicating a change of the occupancy state from non-occupancy to occupancy;
- a second lighting control rule that defines adjusting the light output of the luminaire 120-k (e.g. from the predefined target light intensity) to a predefined stand-by light intensity (e.g. switching off the light output of the luminaire 120-k) in accordance with a predefined dimming curve as a response to the time series of local occupancy state indications indicating a change of occupancy state from occupancy to non-occupancy;
- a third lighting control rule that defines keeping on the light output of the luminaire 120-k at the predefined target light intensity as a response to the time series of local occupancy state indications indicating continued occupancy;
- a fourth lighting control rule that defines keeping the light output of the luminaire 120-k at the stand-by light intensity as a response to the time series of local occupancy state indications indicating continued non-occupancy.

The target light intensity, the stand-by light intensity and the target light level referred to above are predefined lighting control parameters that may be set to respective predefined values e.g. upon manufacturing, installing, configuring or reconfiguring the luminaire 120-k. The predefined dimming curve referred to above may define adjustment of the light output from the predefined target light intensity to the stand-by lighting intensity via one or more predefined intermediate light intensities over a predefined dimming period, where parameters that characterize the predefined dimming curve (e.g. the intermediate light intensities and duration of the dimming period) may be likewise set upon manufacturing, installing, configuring or reconfiguring the luminaire 120-k.

The luminaire control portion 124-k may further operate the communication portion 123-k to transmit (e.g. broadcast) status indication messages from the luminaire 120-k to the other nodes of the lighting control network. A status indication message may comprise one or more status indications that are descriptive of an aspect of operational status of the luminaire 120-k, e.g. that are descriptive of an occurrence of an event pertaining to the luminaire 120-k such as a lighting control action taken by the luminaire 120-k and/or a local sensor indication recorded or derived in the luminaire control portion 124-k. Conversely, the luminaire control portion 124-k may receive, via the communication portion 123-k, status indication messages (and hence status indications) from other ones of the plurality of luminaires 120. In this regard, a status indication transmitted from the luminaire 120-k may comprise e.g. an action indication that identifies a lighting control action taken at the luminaire 120-k or a sensor data indication that reports a current (or the most recent) sensor indication recorded or derived at the luminaire control portion 124-k. Non-limiting examples of action indications and sensor data indications include the following:
- a first action indication that indicates switching on the light output of the luminaire 120-k (to be transmitted e.g. due to a change of the occupancy state from non-occupancy to occupancy detected at the luminaire 120-k),
- a second action indication that indicates initiating adjustment of the light output of the luminaire 120-k to the stand-by light intensity (to be transmitted e.g. due to a change in the occupancy state from occupancy to non-occupancy detected at the luminaire 120-k),
- a third action indication that indicates keeping on the light output of the luminaire 120-k (to be transmitted e.g. due to continued occupancy detected at the luminaire 120-k),
- a fourth action indication that indicates keeping the light output of the luminaire 120-k at the stand-by light intensity (to be transmitted e.g. due to continued non-occupancy detected at the luminaire 120-k);
- a motion sensor data indication reporting the current (or the most recent) local occupancy state indication recorded or derived at the luminaire 120-k.

A status indication message may further comprise the luminaire ID assigned to the luminaire 120-k transmitting the status indication message, thereby providing an identification of the luminaire 120-k to which the status indication(s) conveyed in the status indication message pertain.

In the course of its operation of the luminaire 120-k, the adaptation portion 125-k may store, in the memory provided in the luminaire 120-k, history data that records a history of application of the one or more lighting control rules of the preprogrammed lighting control logic by the luminaire control portion 124-k. In this regard, the history data may comprise a history of occurrences of triggering conditions and the resulting lighting control actions the luminaire control portion 124-k has taken as a response to the triggering conditions and a history of status indications received from other ones of the plurality luminaires 120 via the lighting control network. Moreover, the history data stored by the adaption portion 125-k may further include a history of status indications transmitted from the luminaire 120-k and possibly also a history of local sensor indications recorded or derived at the control portion 124-k. Each piece of history data may be stored together with respective timing information that indicates the capturing time, reception time and/or the transmission time of a respective piece of stored data (whichever applies). The timing information may comprise a respective timestamp that indicates time with respect to a predefined reference time.

In an example, the adaptation portion 125-k may carry out a first learning procedure via an analysis of the history data that represents an analysis period, e.g. a past time period of a predefined duration that precedes the analysis. In various examples, the analysis period may cover a period having a duration from a few minutes to a few weeks, depending on the size of the lighting system 100 and/or characteristics of the space the lighting system 100 serves to illuminate. The analysis may aim at determining an extent of operational relationship between the luminaire 120-k and one or more other ones of the plurality of luminaires 120. In an example, the analysis with respect to a particular other luminaire 120-p may involve deriving a respective relationship strength value that is descriptive of an extent of regularity at which detecting an occurrence of a given event pertaining to the particular other luminaire 120-p (e.g. detecting occupancy at the location of the particular other luminaire 120-p) is followed by detecting occupancy at the location of the luminaire 120-k, where detecting occupancy may comprise detecting a change in the occupancy state at the respective location from non-occupancy to occupancy. Such operational similarity between the luminaire 120-k and the particular other luminaire 120-p may be considered as an indication of the luminaire 120-k and the particular other luminaire 120-p operating in a relatively close proximity to each other and hence serving to illuminate portions of the space that are relatively close to each other and/or that are otherwise linked to each other in terms of movement of occupants of the space.

In an example, the first learning procedure may involve the adaptation portion 125-k carrying out the analysis with respect to one or more other ones of the plurality of luminaires 120 in order to derive the respective relationship strength value for the one or more other ones of the plurality of luminaires 120, where the relationship strength value that pertains to the particular other luminaire 120-p may be descriptive of an extent of regularity at which reception of a status indication that indicates an occurrence of the given event that pertains to (operation of) the particular other luminaire 120-p is followed by detection of occupancy at the location of the luminaire 120-k. As an example in this regard, the given event that pertains to the (operation of) the particular other luminaire 120-p may comprise one that is at least indirectly indicative of detection of a change in occupancy state from non-occupancy to occupancy at the location of the particular other luminaire 120-p, whereas detection of an occurrence of the given event having occurred at the particular other luminaire 120-p may comprise e.g. the luminaire 120-k receiving a given status indication from the particular other luminaire 120-p. Moreover, detection of occupancy at the location of the luminaire 120-k may comprise e.g. identifying a change from non-occupancy to occupancy based on the time series of local occupancy state indications recorded or derived at the luminaire control portion 124-k.

In an example, the given status indication that may be considered in derivation of the relationship strength value may be one that at least indirectly indicates a change of occupancy state from non-occupancy to occupancy observed at the particular other luminaire 120-p, e.g. one of the following:
- an action indication that indicates switching on the light output of the particular other luminaire 120-p, e.g. the first action indication described in the foregoing,
- a motion sensor data indication that indicates a change of occupancy state from non-occupancy to occupancy detected at the particular other luminaire 120-p.

Along the lines described in the foregoing, the relationship strength value pertaining to the particular other luminaire 120-p may be based on the history data, e.g. on the local occupancy state indications recorded in the history data and on occasions of receiving the given status indication originating from the particular other luminaire 120-p recorded in the history data. In this regard, the relationship strength value that pertains the particular other luminaire 120-p and that is derived based on occasions of receiving the given status indication from the particular other luminaire 120-p may be derived in various ways, as far as it serves its purpose of indicating the extent of regularity at which reception of the given status indication from the particular other luminaire 120-p is followed by detection of occupancy at the location of the luminaire 120-k As a non-limiting example in this regard, the adaptation portion 125-k in the luminaire 120-k may derive the respective relationship strength value for one or more other ones of the plurality of luminaries 120 using the technique described in paragraphs [0032] to [0056] of European patent publication no. 3171674 A1.

According to an example, the adaptation portion 125-k may adjust some aspects of lighting control applied by the luminaire control portion 124-k based on the relationship strength values. Such adaptation of operation of the luminaire control portion 124-k may be provided via the adaptation portion 125-k carrying out a first reprogramming procedure, which may involve supplementing the first preprogrammed lighting control logic of the luminaire control portion 124-k in accordance with the respective relationship strength values derived for the one or more other ones of the plurality of luminaires 120. The first reprogramming procedure may comprise, for example, deriving, based on the relationship strength values derived in the adaptation portion 125-k, one or more supplementary lighting control rules for subsequent application by the luminaire control portion 124-k.

As an example, the first reprogramming procedure may involve defining a supplementary lighting control rule that defines switching on the light output of the luminaire 120-k as a response to reception of a status indication that indicates an occurrence of the given event that pertains to the particular other luminaire 120-p, e.g. in response to receiving the given status indication from the particular other luminaire 120-p. Introduction of such a supplementary lighting control rule to the preprogrammed lighting control logic at the luminaire 120-k creates an operational dependency between luminaire 120-k and the particular other luminaire 120-p via the luminaire 120-k following the particular other luminaire 120-p by switching or keeping on its light output in response to receiving the given status indication from the particular other luminaire 120-p, which may be transmitted therefrom in response to the particular other luminaire 120-p detecting occupancy at its location or in response to the particular other luminaire 120-p reacting to occupancy detected at its location via activating its light output. Hence, application of the first learning procedure followed by the first reprogramming procedure at the luminaire 120-k may be considered as self-learning at the luminaire 120-k due to relying on information collected from its operating environment in the course of its operation and due to being carried out without an involvement of an external control entity.

The first reprogramming procedure may involve the adaptation portion 125-k selectively deriving a respective supplementary lighting control rule pertaining to one or more other ones of the plurality of luminaires 120 in dependence of the relationship strength values derived therefor. As an example in this regard, the adaption portion 125-k may derive the supplementary lighting control rule for the particular other luminaire 120-p in response to relationship strength value derived therefor exceeding a threshold value. Assuming an example where the relationship strength values are normalized into the range from 0 to 1, the threshold value may comprise a fixed predefined value selected e.g. from a range from 0.5 to 0.8.

As an example, the first learning procedure (possibly followed by the first reprogramming procedure) may be initiated in response to a user command received e.g. via a user interface of the luminaire 120-k or in response to a specific control message received at the luminaire 120-k via the communication portion 123-k. In the latter scenario, the control message may be transmitted (e.g. broadcast) to the plurality of luminaries 120 e.g. from a control entity that is communicatively coupled thereto via the lighting control network, thereby initiating the first learning procedure in the plurality of luminaires 120. In another example, the first learning procedure may be automatically initiated after a predefined time period since installing, configuring or reconfiguring the luminaire 120-k as part of the lighting system 100. The first learning procedure may be repeated, for example in response to the user command or in response to a control message received via the communication portion 123-k. In another example, additionally or alternatively, the first learning procedure may be automatically repeated according to a predefined schedule, e.g. at predefined time intervals, or the first learning procedure may be carried out substantially continuously e.g. via usage of a sliding window to define the analysis period.

In a further example, the first learning procedure may be repeated according to a predefined schedule that involves usage of an analysis period having a duration that increases from an initial duration from one first learning procedure to another until reaching a predefined maximum duration, e.g. such that the time interval between consecutive first learning procedures is gradually increased and/or that the applied analysis period is gradually increased. As an example in this regard, the initial first learning procedure may apply a very short analysis period (e.g. a few minutes) while the first learning procedure may be first repeated at relatively short time intervals (e.g. once in a few hours or daily) with gradually increasing analysis period duration when more history data becomes available, whereas subsequent repetitions of the first learning procedure may be carried out at longer time intervals (e.g. once a week or once a month) using analysis period of the predefined maximum duration.

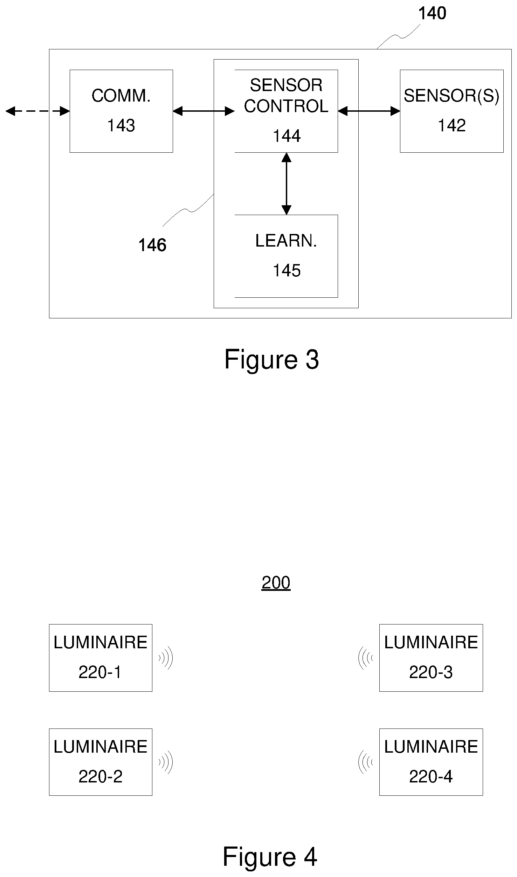

Figure 3 illustrates a block diagram of some (logical) components of a sensor unit 140 according to the present invention, comprising a sensor portion 142 for observing one or more environmental characteristics in the space illuminated by the plurality of luminaires 120, a communication portion 143 for wireless communication with other elements of the lighting control network, sensor control portion 144 for controlling at least one aspect of operation of the sensor unit 140 and for processing sensor data captured at the sensor portion 142 and sensor data received from the plurality of the luminaires 120, and a learning portion 145 for determining one or more occupancy estimation models. The sensor control portion 144 and the learning portion 145 may constitute, at least conceptually, a sensor control apparatus 146.

In an example, the sensor unit 140 may comprise an apparatus comprising a processor and a memory, where the memory is arranged to store computer program code that, when executed by the processor, causes the apparatus to operate as the sensor control portion 144, thereby implementing operations of the sensor control portion 144 and the learning portion 145 according to the present disclosure. More detailed examples of using the processor and the memory for implementing the sensor unit 140 are described later in this text with references to Figure 7. The communication portion 143 may be similar to the communication portion 123-k described in the foregoing, thereby providing communicative coupling(s) that enable exchange of data and control information between the sensor unit 140 and the plurality of luminaires 120.

The sensor unit 140 or an element thereof may have a device ID, e.g. an address, a serial number, a name, etc. assigned thereto. The device ID assigned to the sensor unit 140 may be referred to as a sensor unit ID of the sensor unit 140. The sensor unit ID may be stored, for example, in the memory provided in the sensor unit 140 and it may be applied, for example, to identify the respective sensor unit 140 in communication between elements of the lighting control network.

The sensor portion 142 comprises one or more sensors arranged to observe respective environmental characteristics in the space illuminated by the plurality of luminaires 120. The one or more sensors of the sensor portion 142 may be communicatively coupled, e.g. via respective electrical wires, to the sensor control portion 144 in order to provide respective sensor signals thereto. The one or more sensors of the sensor portion 142 comprise a sound sensor (e.g. a microphone) arranged to capture sounds in the space illuminated by the plurality of luminaires 120, whereas the sensor portion 142 may further comprise e.g. one or more of the following:
- a motion sensor for monitoring occupancy in the space illuminated by the plurality of luminaires 120, e.g. a passive infrared (PIR) sensor, a microwave radar, a lidar, a video camera, a thermal camera, etc.;
- a light sensor for measuring ambient light level in the space illuminated by the plurality of luminaires 120, e.g. photodetector such as photodiode;
- a temperature sensor for measuring ambient temperature in the space illuminated by the plurality of luminaires 120;
- a humidity sensor for measuring air humidity in the space illuminated by the plurality of luminaires 120;
- a carbon dioxide (CO₂) sensor for measuring a CO₂ level in the space illuminated by the plurality of luminaires 120;
- a volatile organic compound (VOC) sensor for measuring respective levels of one or more VOCs in the space illuminated by the plurality of luminaires 120.

In the course of its operation, the sensor control portion 144 may record or derive sensor indications based on respective sensor signals received from the sensor portion 142, which may be referred to as local sensor indications since they are based on sensor data captured locally at the sensor unit 140. The sensor control portion 144 may arrange the local sensor indications into a respective time series of local sensor indications. An example of local sensor indications recorded or derived in the sensor control portion 144, the sensor control portion 144 may derive local occupancy state indications (i.e. respective indications of one of occupancy or non-occupancy) based on a motion sensor signal received from a motion sensor of the sensor portion 142. The sensor control portion 144 is arranged to derive one or more local sound parameters based on a sound sensor signal received from the sound sensor of the sensor portion 142. In this regard, each of the one or more local sound parameters derived based on the sound sensor signal may be descriptive of a respective sound characteristics in the space illuminated by the plurality of luminaires 120, where the one or more sound characteristics may comprise, for example, one or more sound level related characteristics and/or one or more frequency content related sound features computed based on the signal content within a sound analysis window of a predefined duration (e.g. in a range from 30 seconds to one minute), for example one or more of the following:
- an average sound level over the sound analysis window;
- a sound level variation over the sound analysis window;
- a peak sound level (e.g. a maximum sound level) within the sound analysis window;
- a first sound feature that is descriptive of one or presence or absence of sound content at one or more predefined frequencies within the sound analysis window;
- a second sound feature that is descriptive of a relative magnitude of sound content at the one or more predefined frequencies within the sound analysis window;
- a third sound feature that is descriptive of changes in a (relative) magnitude of the sound content as a function of time at the one or more predefined frequencies within the sound analysis window;
- a fourth sound feature that is descriptive of one of presence or absence of human speech within the sound analysis window, where the fourth sound feature may be derived via application of a voice activity detection (VAD) technique known in the art on the sound content within the sound analysis window.

In an example, the one or more sound characteristics under consideration may comprise one or more of the above-described sound level variation related characteristics without any of the first to fourth sound features, in another example the one or more sound characteristics under consideration may comprise at least one of the first to fourth sound features without any of the above-described sound level variation related characteristics, whereas in a further example the one or more sound characteristics under consideration may comprise one or more of the above-described sound level variation related characteristics together with at least one of the first to fourth sound features.

In an example, the one or more predefined frequency ranges may comprise or cover a frequency range of audible frequencies substantially in its entirety (e.g. from 20 Hz to 20 kHz), whereas in another example the one or more predefined frequency ranges may comprise or cover one or more frequency ranges that represent frequencies at which a majority of energy content in human speech typically appears, e.g. a frequency range from 50 Hz to 4 kHz. Regardless of considering the broad frequency range that cover audible frequencies substantially in their entirety or a narrower frequency range (e.g. the one described above), the first to fourth sound features enable assessment occupancy status of the space illuminated by the plurality of luminaires based on the first and/or second sound features.

In an example, the derivation of the first, second, third and/or fourth sound features (as applicable) may be carried out in the sensor unit 140, e.g. via operation of the sensor control portion 144 and/or the learning portion 145. In another example, at least part of the processing involved in derivation of the first, second, third and/or fourth sound features (as applicable) may be carried out in another apparatus, e.g. a server apparatus, that is communicatively coupled to the sensor unit 140 e.g. via the lighting control network.

The sensor unit 140 also receives the respective occupancy state indications in respective motion sensor data indications transmitted from the plurality of luminaires 120 in the course of operation of the lighting system 100. Even though these occupancy state indications are referred to in the foregoing as respective local occupancy state indications recorded or derived in the respective ones of the plurality of luminaires 120, in the viewpoint of the sensor unit 140 these occupancy state indications may be considered as remote occupancy state indications that pertain to a respective one of the plurality of luminaires 120. The learning portion 145 may arrange, for each of the plurality of luminaires 120, the remote occupancy state indications received from the respective luminaire 120-k into a respective time series of remote occupancy state indications that pertains to the respective luminaire 120-k, the learning portion 145 thereby obtaining a knowledge of a history of occupancy state indications captured at respective locations of the plurality of luminaires 120 in the space they serve to illuminate.

In the course of its operation, the learning portion 145 stores, in the memory provided in the sensor unit 140, e.g. the following data:
- a history of the one or more sound parameters;
- respective histories of the remote occupancy state indications pertaining to the plurality of luminaires 120.

The learning portion 145 may further store, in the memory, respective histories of one or more (further) local sensor indications recorded or derived by the sensor control portion 144, e.g. a history of the local occupancy state indications derived based on the motion sensor signal received from the motion sensor of the sensor portion 142. In this regard, the information stored into the memory of the sensor unit 140 is referred to as history data, where each piece of history data may be stored together with respective timing information that indicates the capturing time and/or the reception time of a respective piece of stored data (whichever applies). The timing information may comprise a respective timestamp that indicates time with respect to a predefined reference time.

Consequently, the history data available for a learning procedure to be carried out by the learning portion 145 includes, for a plurality of time instants, the one or more sound parameters derived for the respective time instant and the respective remote occupancy state indication(s) obtained for the respective time instant, possibly together with one or more (further) local sensor indications recorded or derived based on respective sensor signals acquired from the sensor portion 142 for the respective time instant.

Some of the sound characteristics captured in the one or more sound parameters may reflect sounds arising from human activity in the space, such as speech of the occupants of the space, sounds arising from movement of people within the space, to the space or out of the space, sounds arising from people in the space operating devices or machinery in the space, etc. whereas some other sound characteristics may reflect sounds that are not related to human activity in the space (such as noises from operation the HVAC system, noises from devices autonomously operating in the space, environmental noises such as sounds of traffic outside the space, etc.). Hence, identifying respective (typical) values of the one or more sound parameters that typically occur substantially simultaneously with the motion sensor indicating occupancy in the space enables finding the sound characteristics that may be considered to represent occupancy in the space and, vice versa identification of respective (typical) values of the one or more sound parameters that typically occur substantially simultaneously with the motion sensor indicating non-occupancy enables finding the sound characteristics that may be considered to represent non-occupancy in the space. Via considering the one or more sound parameters together with respective occupancy state indications captured at various locations within the space, it is possible to construct a model that is able detect presence of one or more occupants based on the one or more sound parameters that reflect the sound characteristics in the space, even when these occupants remain relatively stationary and/or reside at a relatively long distance from the nearest motion sensor in the space.

The learning portion 145 in the sensor unit 140 carries out the learning procedure based on a portion of the history data in order to determine one or more occupancy estimation models that are applicable for deriving one or more occupancy likelihood coefficients based on the one or more sound parameters. The portion of the history data considered in the learning procedure may be one that represents an analysis period, which may cover a past time period of a predefined duration that precedes the analysis. In various examples, the analysis period may cover a period having a duration from a few days to a few weeks. The learning procedure considers the history of one or more sound parameters and the respective histories of the remote occupancy state indications pertaining to the plurality of luminaires 120 (received in the motion sensor data indications originating from the respective luminaires 120-k). In an example, the learning procedure may additionally consider respective histories of one or more (further) local sensor indications, e.g. the history of the local occupancy state indications.

In an example, the learning procedure is carried out in the course of operation of the sensor unit 140, whereas in another example, a procedure that involves collecting the history data and carrying out the learning procedure to derive the one or more occupancy estimation models is carried out separately from operation of the sensor unit 140, e.g. as a preparatory procedure conducted upon manufacturing, configuring or reconfiguring the sensor unit 140. In such a scenario, the one or more occupancy estimation models obtained via the preparatory procedure may be stored in a memory of the sensor unit 140 for subsequent application in the sensor 140 in the course of its operation.

In an example, the learning procedure may comprise determining a general occupancy estimation model that is arranged to derive a general occupancy likelihood coefficient *C*_{gen} based on respective values of the one or more sound parameters, where the general occupancy likelihood coefficient *C*_{gen} is descriptive of the likelihood of occupancy at a plurality of locations in the space illuminated by the plurality of luminaires 120. In an example, learning data for determining the general occupancy estimation model may include, for a plurality of time instants within the analysis period, respective one or more sound parameters and the respective remote occupancy state indications pertaining to the plurality of luminaires 120, whereas in other example the learning data may further include, for the plurality of time instants within the analysis period, respective one or more sensor indications recorded or derived via operation of the sensor control portion 144, e.g. the local occupancy state indications. In this regard, the learning data may be indicative of a relationship between the one or more sound parameters and the temporally corresponding occupancy state indications under consideration (e.g. the remote occupancy state indications only or both the local and remote occupancy state indications) for example as follows:
- the combination of the one or more sound parameters at time instants for which any of the occupancy state indications under consideration indicates occupancy may be considered as an indirect indication of occupancy in the space illuminated by the plurality of luminaires 120;
- the combination of the one or more sound parameters at time instants for which none of the occupancy state indications under consideration and the remote occupancy state indications indicates occupancy may be considered as an indirect indication of non-occupancy in the space illuminated by the plurality of luminaires 120.

Consequently, the learning procedure may result in determining, based on the learning data, the general occupancy estimation model that is subsequently applicable for deriving the general occupancy likelihood coefficient *C*_{gen} based on respective one or more sound parameters derived at a given (future) time instant. The general occupancy estimation model may comprise, for example, a respective artificial neural network (ANN) known in the art, e.g. a feedforward neural network such as a convolutional neural network (CNN) or a recurrent neural network such as a gated recurrent unit (GRU) or a long short-term memory network (LSTM), whereas the learning procedure may rely on supervised learning that considers the one or more sound parameters included in the learning data as training vectors while the expected output of the occupancy estimation model is derivable based on temporally corresponding occupancy state indications under consideration. In a non-limiting example in this regard, assuming e.g. that zero indicates non-occupancy and that one indicates occupancy, the expected output for a given time instant may be derived as a predefined linear combination of the occupancy state indications under consideration (e.g. as an average thereof) or based on a statistical measure of the occupancy state indications under consideration (e.g. as a median or as another predefined percentile thereof). In another example, the expected output may be derived based on information obtained from an external sensor, such as a camera, which may be applicable for collecting information that serves as part of the learning data in the learning procedure whereas the external sensor may or may not be applicable for (direct) lighting control via operation of the sensor unit 140.

In another example, additionally or alternatively, the learning procedure may comprise determining a location-specific occupancy estimation model for a location of the luminaire 120-k that is applicable for deriving a location-specific occupancy likelihood coefficient *C*ₖ for the location of the space illuminated by the luminaire 120-k based on the one or more sound parameters, where the location-specific occupancy likelihood coefficient *C*ₖ is descriptive of the likelihood of occupancy in the location of the space illuminated by the luminaire 120-k. In the framework of the example of Figure 1 the location-specific occupancy estimation model may be also referred to as a luminaire-specific occupancy estimation model for the luminaire 120-k, which may be applicable for deriving a luminaire-specific occupancy likelihood coefficient *C*ₖ for the luminaire 120-k based on the one or more sound parameters. According to an example, learning data for determining the luminaire-specific occupancy estimation model for the luminaire 120-k may include, for a plurality of time instants within the analysis period, respective one or more sound parameters together with respective remote occupancy state indication pertaining to the luminaire 120-k. In this regard, the learning data may be indicative of a relationship between the one or more sound parameters and the temporally corresponding remote occupancy state indication obtained for the luminaire 120-k e.g. as follows:
- the combination of the one or more sound parameters at time instants for which the remote occupancy state indication pertaining to the luminaire 120-k indicates occupancy may be considered as an indirect indication of occupancy at the location of the luminaire 120-k in the illuminated space;
- the combination of the one or more sound parameters at time instants for which the remote occupancy state indication pertaining to the luminaire 120-k indicates non-occupancy may be considered as an indirect indication of non-occupancy at the location of the luminaire 120-k in the illuminated space.

Consequently, the learning procedure may result in determining, based on the learning data for the plurality of luminaires 120, the respective luminaire-specific occupancy estimation model that is subsequently applicable for deriving the luminaire-specific occupancy likelihood coefficient *C*ₖ based on respective one or more sound parameters derived at a given (future) time instant. The luminaire-specific occupancy estimation model may comprise, for example, a respective ANN known in the art, e.g. a feedforward neural network such as a CNN or a recurrent neural network such as a GRU or a LSTM, whereas the learning procedure may rely on supervised learning that considers the one or more sound parameters included in the learning data as training vectors while the expected output of the model is indicated by the remote occupancy state indication pertaining to the luminaire 120-k.

After the learning portion 145 has carried out the learning procedure to determine the general occupancy estimation model and/or the respective luminaire-specific occupancy estimation model for one or more of the plurality of luminaires 120, the sensor control portion 144 starts applying the respective model(s) to facilitate controlling at least one aspect of respective operation of at least one of the plurality of luminaires 120. As an example in this regard, the sensor control portion 144 may facilitate controlling at least one aspect of respective light output of at least one of the plurality of luminaries 120 via carrying out the following in accordance with a predefined schedule (e.g. at predefined time intervals) in the course of operation of the sensor unit 140:
- derive, based on the sound sensor signal obtained from the sensor portion 142, the one or more sound parameters;
- apply the general occupancy estimation model the derive the general occupancy likelihood coefficient *C*_{gen} and/or apply the respective luminaire-specific occupancy estimation models to derive the respective luminaire-specific likelihood coefficients *C*ₖ for one or more luminaires 120-k based on the derived one or more sound parameters;
- provide the derived general occupancy likelihood coefficient *C*_{gen} and/or the derived respective luminaire-specific likelihood coefficients *C*ₖ for controlling at least one aspect of respective light output of at least one of the plurality of luminaires 120 accordingly.

In another example, the schedule of the sensor control portion carrying out the steps described above may not be predefined one but the schedule may be adapted, for example, in accordance with the most recently derived general occupancy likelihood coefficient *C*_{gen} e.g. such that the rate of repeating the steps described above is proportional to the value of the most recently derived general occupancy likelihood coefficient *C*_{gen}.

Along the lines described in the foregoing, the general occupancy likelihood coefficient *C*_{gen} may be descriptive of the likelihood of the space illuminated by the plurality of luminaires 120 being occupied, where a higher value of *C*_{gen} suggests a higher likelihood of occupancy in the space and, vice versa, where a lower value of *C*_{gen} suggest a lower likelihood of occupancy in the space. Along similar lines, the luminaire-specific occupancy likelihood coefficient *C*ₖ may be descriptive of the likelihood of the location illuminated by the luminaire 120-k being occupied, where a higher value of *C*ₖ suggests a higher likelihood of occupancy in the respective location and, vice versa, where a lower value of *C*ₖ suggest a lower likelihood of occupancy in the respective location.

In a first scenario, the aspect of the sensor control portion 144 providing the general occupancy likelihood coefficient *C*_{gen} and/or the respective luminaire-specific occupancy likelihood coefficients *C*ₖ derived for one or more of the plurality of luminaires 120 for controlling respective light output of at least one of the plurality of luminaires 120 may comprise the sensor control portion 144 controlling the respective light output of at least one of the plurality of luminaires 120 in accordance with the general occupancy likelihood coefficient *C*_{gen} and/or the respective luminaire-specific occupancy likelihood coefficients *C*ₖ. This may involve, for example, the sensor control portion 144 determining, based on the general occupancy likelihood coefficient *C*_{gen} and/or the respective luminaire-specific occupancy likelihood coefficients *C*ₖ, a lighting control instruction for controlling the respective light output of the one or more of the plurality of luminaires 120 and transmitting, via the lighting control network, a lighting control command including the lighting control instruction to those ones of the plurality of luminaires 120 that are expected to adjust their respective light outputs accordingly. As an example in this regard, the lighting control instruction may be selectively determined and transmitted in the lighting control command to the respective luminaires in dependence of the derived general occupancy likelihood coefficient *C*_{gen} or the respective derived luminaire-specific occupancy likelihood coefficient *C*ₖ, where the lighting control instruction may specify a light intensity level or a dimming period duration to be applied by the respective one(s) of the plurality of luminaries 120. Non-limiting examples in this regard include the following:
- the sensor control portion 144 may determine, in response to the general occupancy likelihood coefficient *C*_{gen} exceeding a first occupancy likelihood threshold, a first lighting control instruction that instructs the plurality of luminaires 120 to temporarily increase the predefined stand-by light intensity to a first intermediate light intensity;
- the sensor control portion 144 may determine, in response to the general occupancy likelihood coefficient *C*_{gen} exceeding the first likelihood threshold, a second lighting control instruction that instructs the plurality of luminaires 120 to temporarily extend the duration of the dimming period applied upon adjusting the light output of the respective one of the plurality of luminaires 120 to the predefined stand-by light intensity (e.g. via operation of the second lighting control rule described in the foregoing);
- the sensor control portion 144 may transmit, in response to the general occupancy likelihood coefficient *C*_{gen} being below a second likelihood threshold that is smaller than the first occupancy likelihood threshold, a third lighting control instruction that instructs the plurality of luminaires 120 to temporarily shorten the duration of the dimming period applied upon adjusting the light output of the respective one of the plurality of luminaires 120 to the predefined stand-by light intensity;

- the sensor control portion 144 may transmit, in response to the luminaire-specific occupancy likelihood coefficient *C*ₖ exceeding the first occupancy likelihood threshold, a fourth lighting control instruction that instructs the luminaire 120-k to temporarily increase the predefined stand-by light intensity to the first intermediate light intensity;
- the sensor control portion 144 may transmit, in response to the luminaire-specific occupancy likelihood coefficient *C*ₖ exceeding the first likelihood threshold, a fifth lighting control instruction that instructs the luminaire 120-k to temporarily extend the duration of the dimming period applied upon adjusting the light output of the luminaire 120-k to the predefined stand-by light intensity;
- the sensor control portion 144 may transmit, in response to the luminaire-specific occupancy likelihood coefficient *C*ₖ being below the second occupancy likelihood threshold, a sixth lighting control instruction that instructs the luminaire 120-k to temporarily shorten the duration of the dimming period applied upon adjusting the light output of the luminaire 120-k to the stand-by light intensity.

In the examples described above, the first intermediate light intensity may fall between the predefined stand-by light intensity and the predefined target light intensity described in the foregoing. According to an example, the first intermediate light intensity may comprise a predefined light intensity, whereas in another example the first intermediate light intensity may comprise a light intensity that is defined based on the respective one of the general occupancy likelihood coefficient *C*_{gen} or based on the respective luminaire-specific occupancy likelihood coefficient *C*ₖ (whichever applies). In the latter example, the first intermediate light intensity may be set to a value that is proportional to the respective one of the general occupancy likelihood coefficient *C*_{gen} or the first intermediate light intensity may be defined based on the respective luminaire-specific occupancy likelihood coefficient *C*ₖ such that increasing value of the respective one of *C*_{gen} or *C*ₖ results in increasing first intermediate light intensity and, vice versa, that decreasing value of the respective one of *C*_{gen} or *C*ₖ results in decreasing first intermediate light intensity. The first intermediate light intensity may be specified in the respective lighting control instruction. The respective one of the second or fifth lighting control instructions may directly specify the extended duration of the dimming period or it may specify an amount by which the duration of the dimming period is be extended, whereas the respective one of the third or sixth lighting control instructions may directly specify the shortened duration of the dimming period or it may specify an amount by which the duration of the diming period is to be shortened.

Still referring to the first scenario, the adaptation portion 125-k in the luminaire 120-k may respond to the first or fourth lighting control instruction transmitted from the sensor unit 140 according to the respective examples above by temporarily increasing the stand-by light intensity from its predefined value to the first intermediate light intensity. Consequently, the light output of the luminaire 120-k may be provided at an intensity level higher than the predefined stand-by light intensity also in a situation where the local occupancy state indication derived at the luminaire 120-k (based on the motion sensor signal received from a motion sensor of the sensor portion 122-k) indicates non-occupancy.

Along similar lines, the adaptation portion 125-k in the luminaire 120-k may respond to the second, third, fifth or sixth lighting control instruction transmitted from the sensor unit 140 according to the respective examples above by adjusting the duration of the dimming period as specified in the respective lighting control instruction. Consequently, adjusting the light output of the luminaire 120-k to the stand-by light intensity may be carried out via applying a dimming period of extended duration in a situation where the general occupancy likelihood coefficient *C*_{gen} or the luminaire-specific occupancy likelihood coefficient *C*ₖ derived for the respective luminaire 120-k in the sensor control portion 144 suggests occupancy at a likelihood that is higher than the first occupancy likelihood threshold, whereas adjusting the light output of the luminaire 120-k to the stand-by light intensity may be carried out via applying a dimming period of shortened duration in a situation where the general occupancy likelihood coefficient *C*_{gen} or the luminaire-specific occupancy likelihood coefficient *C*ₖ derived for the respective luminaire 120-k in the sensor control portion 144 suggests occupancy at a likelihood that is smaller than the second occupancy likelihood threshold.

In a second scenario, the aspect of the sensor control portion 144 providing the general occupancy likelihood coefficient *C*_{gen} and/or the respective luminaire-specific occupancy likelihood coefficients *C*ₖ derived for one or more of the plurality of luminaires 120 for controlling respective light output of at least one of the plurality of luminaires may comprise the sensor control portion 144 transmitting, via the lighting control network, lighting control information to associated luminaires, where the lighting control information may include the general occupancy likelihood coefficient *C*_{gen} and/or the respective luminaire-specific occupancy likelihood coefficients *C*ₖ derived for one or more of the plurality of luminaires 120. In this regard, the lighting control information that includes the general occupancy likelihood coefficient *C*_{gen} may be transmitted to each of the plurality of luminaires 120, whereas the lighting control information that includes the luminaire-specific occupancy likelihood coefficient *C*ₖ for the luminaire 120-k may be transmitted at least to the respective luminaire 120-k. Hence, in this scenario the lighting control via operation of the sensor control portion 144 involves transmission of the general occupancy likelihood coefficient *C*_{gen} and/or the respective luminaire-specific occupancy likelihood coefficients *C*ₖ to the luminaire 120-k, whereas the manner of applying this information for controlling the light output may be defined via operation of the luminaire control portion 124-k and/or the adaptation portion 125-k of the respective luminaire 120-k.

The lighting control information may be transmitted (e.g. broadcast) from the sensor unit 140 (via the communication portion 143) as respective status indication messages for reception by one or more of the plurality of luminaires 120, where the status indication messages may apply a format that is similar to that of the status indication messages transmitted from the plurality of luminaires 120. In this regard, a status indication message may include one or more occupancy likelihood indications, where an occupancy likelihood indication may include e.g. the most recently derived general occupancy likelihood coefficient *C*ₖ derived in the sensor control portion 144 or the respective most recently derived luminaire-specific occupancy likelihood coefficient *C*ₖ derived in the sensor control portion 144 for one of the plurality of luminaires 120. A status indication message transmitted from the sensor unit 140 may further comprise the sensor unit ID assigned to the sensor unit 140, thereby providing an identification of the sensor unit 140 to which the occupancy likelihood indication(s) conveyed in the status indication message pertain in an environment where two or more sensor units are being operated.

Still referring to the second scenario, the adaptation portion 125-k in the luminaire 120-k may respond to the general occupancy likelihood coefficient *C*_{gen} or the luminaire-specific occupancy likelihood coefficient *C*ₖ received in the occupancy likelihood indications transmitted from the sensor unit 140 by determining, based on the general occupancy likelihood coefficient *C*_{gen} or on the luminaire-specific occupancy likelihood coefficient *C*ₖ, a lighting control instruction for application by the luminaire control portion 124-k, where application of the lighting control instruction may result in the lighting control portion 124-k adjusting the light output of the luminaire 120-k in a manner that accounts for the received general occupancy likelihood coefficient *C*_{gen} or the received luminaire-specific occupancy likelihood coefficient *C*ₖ. As non-limiting examples in this regard, the lighting control instruction determined by the adaptation portion 125-k may include any of the fourth, fifth or sixth lighting control instruction described in the foregoing.

Consequently, in an example, application of the lighting control instruction may result in the light output of the luminaire 120-k being provided at a light intensity level that is higher than the predefined stand-by light intensity also in a situation where the local occupancy state indication derived at the luminaire 120-k indicates non-occupancy, whereas in other examples application of the lighting control instruction may result in the light output of the luminaire 120-k being adjusted to the stand-by light intensity via a dimming curve of extended duration in a situation where the relevant occupancy likelihood coefficient suggests relatively high likelihood of occupancy or it may result in the light output of the luminaire 120-k being adjusted to the stand-by light intensity via a dimming curve of shortened duration in a situation where the relevant occupancy likelihood coefficient suggests relatively low likelihood of occupancy.

The sensor control portion 145 may store, in the memory provided in the sensor unit 140, a history of the general occupancy likelihood coefficients *C*_{gen} or the luminaire-specific occupancy likelihood coefficient *C*ₖ for one or more of the plurality of luminaires 120 derived in the course of its operation, where each occupancy likelihood coefficient *C*_{gen}, *C*ₖ may be stored with respective timing information (e.g. with the respective timestamp). This allows for determining a model that represents respective expected values or expected value ranges for the occupancy likelihood coefficients *C*_{gen}, *C*ₖ over time, e.g. in view of the time of the day and/or the day of the week. Consequently, subsequently derived occupancy likelihood coefficients *C*_{gen}, *C*ₖ may be compared against the model in order to identify possibly unexpected values of the occupancy likelihood coefficients *C*_{gen}, *C*ₖ in view of the time of the day and/or in view of the day of the week.

In another example, the luminaire 120-k may apply the received general occupancy likelihood coefficients *C*_{gen} or the received luminaire-specific occupancy likelihood coefficients *C*ₖ received over time from the sensor unit 140 as input data to a second learning procedure carried out by the adaptation portion 125-k. In this regard, the adaptation portion 125-k may store the general occupancy likelihood coefficients *C*_{gen} and/or the luminaire-specific occupancy likelihood coefficients *C*ₖ received from the sensor unit 140 into the history data, where each occupancy likelihood coefficient *C*_{gen}, *C*ₖ may be stored with respective timing information that indicates the reception time of the respective likelihood coefficient *C*_{gen}, *C*ₖ (e.g. a respective timestamp), and the adaptation portion 125-k may carry out the second learning procedure that involves an analysis of a history of the general occupancy likelihood coefficients *C*_{gen} or a history of the luminaire-specific occupancy likelihood coefficients *C*ₖ.

In a non-limiting example, the analysis in the framework of the second learning procedure may be carried out on the history of general occupancy likelihood coefficients *C*_{gen} in order to determine one or more temporal relationships between respective occurrences of corresponding changes in the value of the general occupancy likelihood coefficient *C*_{gen} and the local occupancy state derived at the luminaire 120-k. This may involve, for example, deriving one or more relationship strength values that are descriptive of a regularity at which a change in the general occupancy likelihood coefficient *C*_{gen} is followed by a corresponding change in the local occupancy state derived at the luminaire 120-k. In an example, the analysis in this regard may aim at identifying a regularly occurring pattern where a change of the general occupancy likelihood coefficient *C*_{gen} from a value that fails to exceed a first predefined threshold (e.g. the first occupancy likelihood threshold described in the foregoing) to a value that exceeds the first predefined threshold is followed by a change of the local occupancy state from non-occupancy to occupancy. In another example, the analysis may involve deriving a second relationship strength value that is descriptive of a regularity at which a change of the general occupancy likelihood coefficient *C*_{gen} from a value that exceeds a second predefined threshold that is smaller than the first predefined threshold (e.g. the second occupancy likelihood threshold described in the foregoing) to a value that is smaller than the second predefined threshold is followed by a change of the local occupancy state from occupancy to non-occupancy.

In a non-limiting example in this regard, the analysis may involve deriving a first relationship strength value that is descriptive of an extent of regularity at which a change of the general occupancy likelihood coefficient *C*_{gen} from a value that fails to exceed the first predefined threshold to a value that exceeds the first predefined threshold is followed by detecting occupancy at the luminaire 120-k, where detecting occupancy may comprise the local occupancy state indications (described in the foregoing) indicating change from non-occupancy to occupancy. In a variation of this example, the analysis may involve deriving respective first relationship strength values that pertain to a change of similar kind in the general occupancy likelihood coefficient *C*_{gen} in view of a plurality of different threshold values.

In another example, the analysis may involve deriving a second relationship strength value that is descriptive of an extent of regularity at which a change of the general occupancy likelihood coefficient *C*_{gen} from a value that exceeds the second predefined threshold to a value that is smaller than the second predefined threshold is followed by detecting non-occupancy at the luminaire 120-k, where detecting non-occupancy may comprise the local occupancy state indications (described in the foregoing) indicating change from occupancy to non-occupancy. In a variation of this example, the analysis may involve deriving respective second relationship strength values that pertain to a change of similar kind in the general occupancy likelihood coefficient *C*_{gen} in view of a plurality of different threshold values.

The first relationship strength value(s) and/or the second relationship strength value(s) described above may be derived according to the procedure described in the foregoing with references to the analysis carried out in the framework of the first learning procedure carried out in the adaptation portion 125-k in order to find operational relationships between the luminaires 120-k and 120-p, *mutatis mutandis.*

According to an example, the adaptation portion 125-k may selectively adapt some aspects of lighting control applied by the luminaire control portion 124-k in dependence of the first and/or second relationship strength values derived via analysis of the respective history of the general occupancy likelihood coefficients *C*_{gen}. Such adaptation of operation of the luminaire control portion 124-k may be provided via the adaptation portion 125-k carrying out a second reprogramming procedure, which may involve supplementing the preprogrammed lighting control logic of the luminaire control portion 124-k in dependence of the first and/or second relationship strength values derived based on the general occupancy likelihood coefficients *C*_{gen}, e.g. via deriving, based on the first and/or second relationship strength values, one or more additional lighting control rules for subsequent application by the luminaire control portion 124-k.

As an example relying on the general occupancy likelihood coefficient *C*_{gen}, the second reprogramming procedure may involve defining a first additional lighting control rule that defines switching on the light output of the luminaire 120-k as a response to detecting a change of the general occupancy likelihood coefficient *C*_{gen} from a value that fails to exceed the first predefined threshold to a value that exceeds the first predefined threshold. Introduction of the first additional lighting control rule to the preprogrammed lighting control logic at the luminaire 120-k aims at making use of the knowledge of the occupancy likelihood obtained via operation of the sensor unit 140 to ensure timely reaction to occupancy that is likely to occur at the location of the luminaire 120-k in immediate future. In another example, the second reprogramming procedure may comprise defining a second additional lighting control rule that defines (initiating) switching the light output of the luminaire 120-k to the stand-by light intensity as a response to detecting a change of the general occupancy likelihood coefficient *C*_{gen} from a value that exceeds the second predefined threshold to a value that is smaller than the second predefined threshold. Introduction of the second additional lighting control rule to the preprogrammed lighting control logic at the luminaire 120-k aims at making use of the knowledge of the occupancy likelihood obtained via operation of the sensor unit 140 to ensure timely reaction to non-occupancy that is likely to occur at the location of the luminaire 120-k in immediate future.

Application of the second learning procedure followed by the second reprogramming procedure at the luminaire 120-k may be considered as self-learning at the luminaire 120-k due to relying on information collected from its operating environment in the course of its operation and due to being carried out without an involvement of a human operator.

The second reprogramming procedure may be carried out in dependence of the one or more relationship strength values derived based on the general occupancy likelihood coefficients *C*_{gen} received at the luminaire 120-k, e.g. in dependence of the first and/or second relationship strength values described in the foregoing. As an example in this regard, the adaption portion 125-k may selectively define the first and/or second additional lighting control rules pertaining to the change in value of the general occupancy likelihood coefficient *C*_{gen} in response to the respective one of the first or second relationship strength value exceeding a threshold value. Assuming an example where the first and/or second relationship strength values are normalized into the range from 0 to 1, the threshold value may comprise a fixed predefined value selected e.g. from a range from 0.5 to 0.8.

While the examples above that pertain to the second learning procedure that is based on the relationship strength value(s) derived via analysis of the history of the general occupancy likelihood coefficients *C*_{gen} derived at the sensor unit 140, in other examples, additionally or alternatively, respective relationship strength values may be derived based on the history of the luminaire-specific occupancy likelihood coefficients *C*ₖ derived in the sensor unit 140 for the luminaire 120-k or based on the history of luminaire-specific occupancy likelihood coefficient *C*ₚ derived in the sensor unit 140 for a particular other luminaire 120-p of the plurality of luminaries 120, *mutatis mutandis.*

The examples described in the foregoing, at least implicitly, refer to the plurality of luminaires 120 and the sensor unit 140 operating as part of the lighting system according to the example of Figure 1. In a variation of such a framework, the sensor unit 140 may receive the remote occupancy state indications from motion sensor apparatuses that are operating in the space illuminated by the plurality of luminaires 120 but that may be provided separately and/or independently of the plurality of luminaires 120 and that may report the occupancy state indications derived therein to the sensor unit 140-k via the lighting control network in status indication messages of the type described in the foregoing. In such an arrangement, the luminaires 120-k may not necessarily include respective motion sensors (or respective sensor portions 122-k) of their own but the lighting control therein may rely on respective occupancy state indications supplied from the motion sensor apparatuses via the sensor unit 140 and/or lighting control commands derived in the sensor unit 140 based on respective occupancy state indications received from the motion sensor apparatuses. Moreover, in such an arrangement the communicative coupling between nodes of the lighting control network may be provided via respective wired or wireless communication links or via a wired or wireless communication network or communication bus provided using a suitable communication technique known in the art.

Figure 4 illustrates a block diagram of some components of a lighting system 200 according to an example. Like the lighting system 100, also the lighting system 200 may be arranged for illuminating a space or area, which may comprise e.g. one or more indoor spaces or areas. In the example of Figure 4 the lighting system 200 is shown with luminaires 220-1, 220-2, 220-3 and 220-4, which represent a plurality of luminaires 220, whereas any individual luminaire may be referred to via a reference number 220-k. The plurality of luminaires 220 are arranged for illuminating respective locations of the space. The plurality of luminaires 220 may be communicatively coupled to each other via respective wireless communication links or via a wireless communication network provided using a suitable wireless communication technique known in the art, each of the plurality of luminaires 220 hence serving as a respective node of a lighting control network.

It is worth noting that the example of Figure 4 serves to illustrate the plurality of luminaires 220 as respective operational elements of the lighting system 200, while on the other hand the illustration of Figure 4 does not serve to illustrate any physical characteristics of these elements of the lighting system 200 and/or any aspects of spatial relationship between these elements of the lighting system 200.

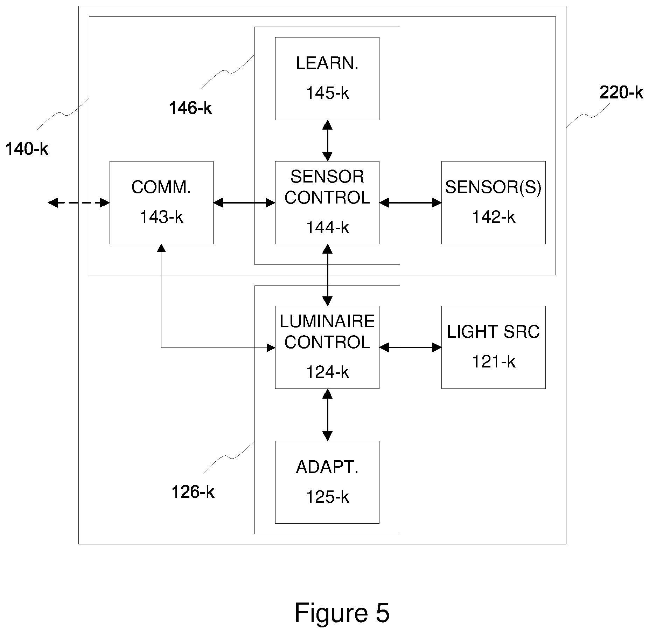

Figure 5 illustrates a block diagram of some (logical) components of a luminaire 220-k according to an example. In the following, various characteristic of structure and operation of any of the plurality of luminaires 220 are described via references to the single luminaire 220-k, whereas these characteristics pertain to each of the plurality of luminaries 220, unless explicitly described otherwise. The luminaire 220-k may comprise the at least one light source 121-k and the luminaire control apparatus 126-k, whereas the latter may comprise the luminaire control portion 124-k and the adaptation portion 125-k. Respective operation of each of these components of the luminaire 220-k is described in the foregoing with references to luminaire 120-k according to the example of Figure 2.

The luminaire 220-k further comprises a sensor unit 140-k that may comprise a sensor portion 142-k, a communication portion 143-k, a sensor control portion 144-k, and a learning portion 145-k, where the sensor control portion 144-k and the learning portion 145-k may, at least conceptually, constitute the sensor control apparatus 146-k. These components of the luminaire 220-k are similar in operation to the sensor portion 142, the communication portion 143, the sensor control portion 144, and the learning portion 145, respectively. The luminaire control portion 124-k of the luminaire 220-k may communicate with other devices using the communication portion 143-k of the sensor unit 140-k and the luminaire control portion 124-k may receive the local sensor data from the sensor portion 142-k of the sensor unit 140-k.

The sensor portion 142-k of the sensor unit 140-k includes, in addition to the sound sensor, at least the motion sensor to enable derivation of the local occupancy state indications at the luminaire 220-k. The sensor control portion 144-k may derive the local occupancy state indications based on the motion sensor signal received from the motion sensor of the sensor portion 142-k and pass the local occupancy state indications to the luminaire control portion 124-k to enable lighting control therein via lighting control logic implemented therein, where the lighting control logic may define e.g. the first, second, third and fourth lighting control rules described in the foregoing. The sensor control portion 144-k may record or derive other sensor indications based on respective sensor signal received from the sensor portion 142-k and pass these sensor indications to the luminaire control portion 124-k (at least) to extent they are applicable for lighting control via operation of the lighting control logic applied therein.

The luminaire 220-k may receive the respective occupancy state indications in respective motion sensor data indications transmitted from other ones of the plurality of luminaires 220 in the course of operation of the lighting system 200. Even though these occupancy state indications are considered as respective local occupancy state indications when recorded or derived in the respective ones of the plurality of luminaires 220, in the viewpoint of the luminaire 220-k these occupancy state indications may be considered as remote occupancy state indications that pertain to a respective other luminaire of the plurality of luminaires 220. Hence, the learning portion 145-k in the luminaire 220-k may store the local occupancy state indications and the respective remote occupancy state indications received from other ones of the plurality of luminaires 220 as history data in a memory at the luminaire 220-k and carry out the learning procedure in a manner described in the foregoing for the learning portion 145 of the sensor unit 140 to determine the one or more occupancy estimation models for subsequent application at the luminaire 220-k based on history data stored in the luminaire 220-k. In this regard, the learning portion 145-k may determine the general occupancy estimation model based on respective histories of the remote occupancy state indications received from other ones the plurality of luminaires 220 and/or determine the respective luminaire-specific occupancy estimation models pertaining to one or more other luminaires 220-p of the plurality of luminaires 220 based on remote occupancy state indications received from the respective other luminaire 220-p. Moreover, the learning portion 145-k may further determine a luminaire-specific occupancy estimation model pertaining to the luminaire 220-k based on a history of local occupancy state indications and/or further consider the history of local occupancy state indications in derivation of the general occupancy estimation model.

The aspect of the sensor control portion 144-k of the luminaire 220-k applying the general occupancy estimation model and/or the respective luminaire-specific occupancy estimation models derived for one or more other luminaires of the plurality of luminaires 220 for facilitating lighting control within the lighting system 200 may be substantially similar to that described in the foregoing in context of the sensor control portion 144 of the sensor unit 140 making use of the respective occupancy estimation model(s) for lighting control within the lighting system 100, *mutatis mutandis.* In this regard, the general occupancy likelihood coefficient that is derivable using the general occupancy estimation model derived at the luminaire 220-k may be referred to as a local general occupancy likelihood coefficient *C*_{k,gen}, whereas the luminaire-specific occupancy likelihood coefficient pertaining to the luminaire 220-p that is derivable using the respective luminaire-specific occupancy estimation model derived at the luminaire 220-k may be referred to as a local luminaire-specific occupancy likelihood coefficient *C*_{k,p}. Moreover, the luminaire-specific occupancy likelihood coefficient pertaining to the luminaire 220-k itself that is derivable using the respective luminaire-specific occupancy estimation model derived at the luminaire 220-k may be referred to as a local luminaire-specific occupancy likelihood coefficient C_{k,k}.

Application of the occupancy estimation models in the sensor control portion 144-k may be carried out e.g. according to the first scenario or according to the second scenario described in the foregoing, while the sensor control portion 144-k may directly pass the relevant lighting control instruction, the local generic occupancy likelihood coefficient *C*_{k,gen} and/or the luminaire-specific occupancy likelihood coefficients *C*_{k,p}, *C*_{k,k} to the adaptation portion 125-k instead of transmitting these pieces of information to the adaptation portion 125-k via the lighting control network.

According to an example, in its subsequent operation the sensor control portion 144-k in the luminaire 220-k may further transmit the local general occupancy likelihood coefficients *C*_{k,gen} and/or the local luminaire-specific occupancy likelihood coefficients *C*_{k,p}, *C*_{k,k} derived therein in the course of operation of the luminaire 220-k to other ones of the plurality of luminaires 220. Conversely, the other ones of the plurality of luminaires 220 may likewise transmit the respective local general occupancy likelihood coefficients *C*_{p,gen} and/or the respective local luminaire-specific occupancy likelihood coefficients *C*_{p,k}, *C*_{p,p} derived therein to other luminaires and, consequently, the sensor control portion 144-k in the luminaire 220-k may receive them as respective remote occupancy likelihood coefficients *C*_{p,gen}, *C*_{p,k}, *C*_{p,p}, where *C*_{p,k} denotes the remote luminaire-specific occupancy likelihood coefficient derived at the luminaire 220-p for the luminaire 220-k and *C*_{p,p} denotes the remote luminaire-specific occupancy likelihood coefficient derived at the luminaire 220-p for itself.

The adaptation portion 125-k in the luminaire 220-k may store a respective history of at least one of the following as history data in the memory of the luminaire 220-k:
- local general occupancy likelihood coefficients *C*_{k,gen},
- remote general occupancy likelihood coefficients *C*_{p,gen},
- local luminaire-specific occupancy likelihood coefficients *C*_{k,p} and/or *C*_{k,k},
- remote luminaire-specific occupancy likelihood coefficients *C*_{p,k} and/or *C*_{p,p},
where each item of the history data may be stored with respective timing information that indicates the derivation time or reception time of the respective occupancy likelihood coefficient *C*_{k,gen}, *C*_{p,gen}, *C*_{k,p}, *C*_{k,k}, *C*_{p,k}, *C*_{p,p} (e.g. a respective timestamp). Consequently, the adaptation portion 125-k may carry out a third learning procedure that involves an analysis of a history of the respective one of the occupancy likelihood coefficients *C*_{k,gen}, *C*_{p,gen}, *C*_{k,p}, *C*_{k,k}, *C*_{p,k}, *C*_{p,p} in order to derive respective one or more relationship strength values that are descriptive of a regularity at which a certain change in the respective occupancy likelihood coefficient *C*_{k,gen}, *C*_{p,gen}, *C*_{k,p}, *C*_{k,k}, *C*_{p,k}, *C*_{p,p} is followed by a corresponding change in the local occupancy state derived at the luminaire 220-k. The analysis carried out in the framework of the third learning procedure may be followed by a third reprogramming procedure that involves selectively defining one or more additional lighting control rules for subsequent application by the luminaire control portion 124-k, which one or more additional lighting control rules are responsive to the certain change in the respective occupancy likelihood coefficient *C*_{k,gen}, *C*_{p,gen}, *C*_{k,p}, *C*_{k,k}, *C*_{p,k}, *C*_{p,p}.

The third learning procedure and the subsequent third reprogramming procedure may be carried out in a manner described in the foregoing for the second learning procedure and the subsequent second reprogramming procedure, *mutatis mutandis,* whereas application of the third learning procedure followed by the third reprogramming procedure at the luminaire 220-k may be considered as self-learning at the luminaire 220-k due to relying on information collected from its operating environment in the course of its operation and due to being carried out without an involvement of a human operator.

In the examples described in the foregoing the self-learning via the second learning procedure at the luminaire 120-k, 220-k or via the third learning procedure at the luminaire 220-k relies directly on analysis of a history occupancy likelihood coefficients obtained therein in view of a history of the temporally corresponding occupancy state indications available at the respective luminaire 120-k, 220-k and it may result in supplementing the lighting control logic applied by the luminaire control portion 124-k for subsequent lighting control via operation of the luminaire control portion 124-k. In other examples, the self-learning at the at the luminaire 120-k, 220-k may comprise adjustment of the one or more supplementary lighting control rules possibly defined via the first reprogramming procedure in consideration of the occupancy likelihood coefficients obtained at the adaptation portion 125-k of the luminaire 120-k, 220-k. Such adjustment may be carried out based on an analysis of a history of occupancy likelihood coefficients and the adjustment may involve modifying, in subsequent operation of the luminaire control portion 124-k, the triggering condition of a supplementary lighting control rule in dependence of the occupancy likelihood coefficient, modifying the lighting control action of a supplementary lighting control rule in dependence of the occupancy likelihood coefficient, or disabling a supplementary lighting control rule in dependence of the occupancy likelihood coefficient.

In the examples described in the foregoing, the lighting control at the sensor unit 140 or at the luminaire 120-k, 220-k and/or the self-learning at the luminaire 120-k, 220-k may rely on occupancy likelihood coefficients derived via application of the respective occupancy estimation model derived via operation of the learning portion 145, 145-k of the sensor unit 140, 140-k, where the occupancy likelihood coefficients are descriptive of the likelihood of occupancy at least in one location of the space illuminated by the plurality of luminaires 120, 220, the occupancy likelihood coefficients thereby providing a measure that indicates a likelihood of one or more occupants residing in the respective at least one location of the space.

In another example, the learning portion 145, 145-k may be arranged to determine an occupancy estimation model for deriving an occupancy level coefficient that is descriptive of an extent of occupancy at least in one location of the space illuminated by the plurality of luminaires 120, 220, where the occupancy level coefficients serve as a quantitative measure that provides an estimate of the number of occupants residing in the respective at least one location of the space. In this regard, the learning procedure (at the learning portion 145, 145-k) for derivation of the occupancy estimation model may be carried out in a manner similar to that described in the foregoing for the learning model(s) applicable for deriving the occupancy likelihood coefficient(s), with the exception that the expected output of the occupancy estimation model for the supervised learning may be derived differently, e.g. as a second predefined linear combination of the occupancy state indications under consideration or based on a second statistical measure of the occupancy state indications under consideration. Consequently, the lighting control at the sensor unit 140 or at the luminaire 120-k, 220-k and/or the self-learning at the luminaire 120-k, 220-k may be carried out as described in the foregoing, apart from relying on the occupancy level coefficients instead of the occupancy likelihood coefficient.

In a further example, the learning portion 145, 145-k may determine a first occupancy estimation model for deriving the occupancy likelihood coefficient that is descriptive of the likelihood of occupancy at least in one location of the space illuminated by the plurality of luminaires 120, 220 and a second occupancy estimation model for deriving the occupancy level coefficient that is descriptive of an extent of occupancy in the at least in one location of the space, whereas the lighting control at the sensor unit 140 or at the luminaire 120-k, 220-k and/or the self-learning at the luminaire 120-k, 220-k may rely on both the occupancy likelihood coefficients and the occupancy level coefficients. In a variation of such an example, the learning portion 145, 145-k may determine a single occupancy estimation model for deriving both the occupancy likelihood coefficient that is descriptive of the likelihood of occupancy at least in one location of the space illuminated by the plurality of luminaires 120, 220 and the occupancy level coefficient that is descriptive of an extent of occupancy in the at least in one location of the space, whereas in such a variant the learning procedure (at the learning portion 145, 145-k) for determination of the occupancy estimation model may be carried out in a manner similar to that described in the foregoing, *mutatis mutandis.*

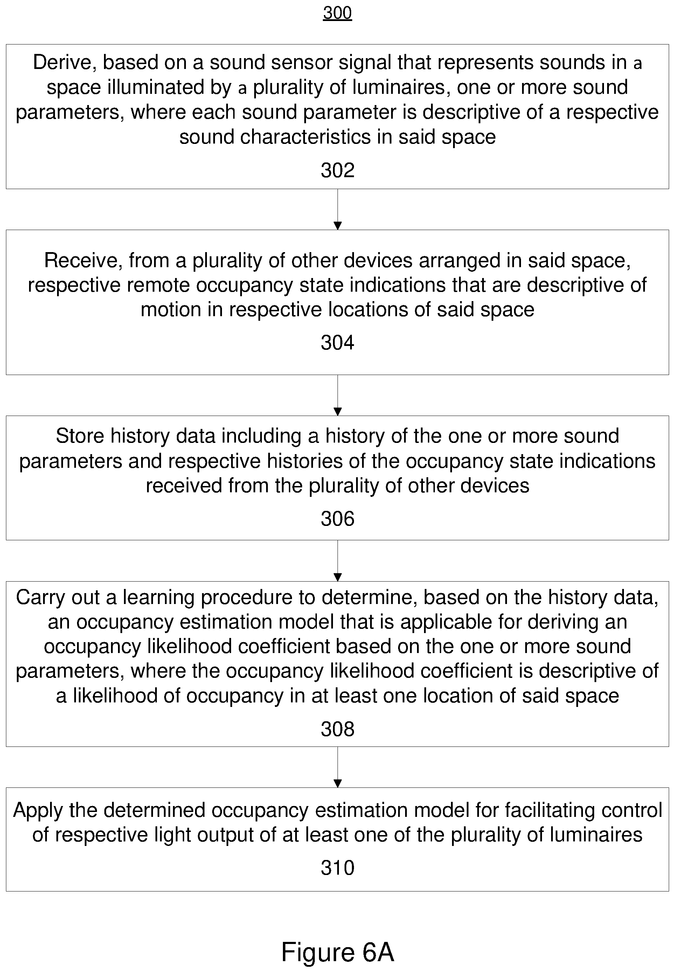

According to an example, various aspects of operation of the sensor unit 140, 140-k may be also described via a method carried out in the sensor unit 140, 140-k. Figure 6A illustrates a method 300 for control of respective light output of at least one luminaire 120-k, 220-k according to the present invention. The method 300 comprises the following steps:
- deriving, based on the sound sensor signal that represents sounds in the space illuminated by the plurality of luminaires 120, 220, one or more sound parameters, where each sound parameter is descriptive of a respective sound characteristics in said space (block 302);
- receiving, from a plurality of other devices (e.g. from the plurality of luminaires 120, 220) arranged in said space, respective remote occupancy state indications that are descriptive of motion in respective locations of said space (block 304);

- storing history data including a history of the one or more sound parameters and respective histories of the occupancy state indications received from the plurality of other devices (block 306);
- carrying out a learning procedure to determine, based on the history data, an occupancy estimation model that is applicable for deriving an occupancy likelihood coefficient based on the one or more sound parameters, where the occupancy likelihood coefficient is descriptive of a likelihood of occupancy in at least one location of said space (block 308); and
- applying the determined occupancy estimation model for facilitating control of respective light output of at least one of the plurality of luminaires 120, 220 (block 310).

The respective operations described with references to the method steps represented by blocks 302 to 310 may be complemented in a number of ways, e.g. according to the examples that pertain to operation and/or characteristics of the sensor unit 140, 140-k described in the foregoing. Moreover, the method 300 may be complemented with one or more additional steps without departing from the scope of the lighting control approach according to the method 300.

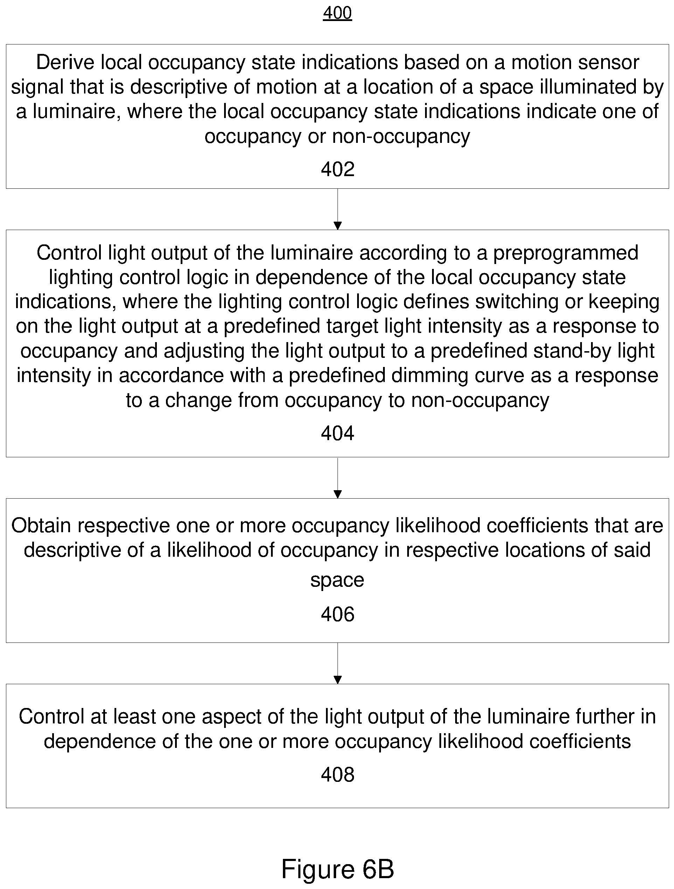

According to an example, various aspects of operation of the luminaire 120-k, 220-k may be also described via a method carried out in the luminaire 120-k, 220-k. As an example in this regard, Figure 6B illustrates a method 400 for facilitating control of the light output of the luminaire 120-k, 220-k. The method 400 may comprise e.g. the following steps:
- deriving local occupancy state indications based on a motion sensor signal that is descriptive of motion at a location of a space illuminated by the luminaire 120-k, 220-k, where the local occupancy state indications indicate one of occupancy or non-occupancy (block 402);
- controlling the light output of the luminaire 120-k, 220-k according to the preprogrammed lighting control logic in dependence of the local occupancy state indications, where the lighting control logic defines switching or keeping on the light output at a predefined target light intensity as a response to occupancy and adjusting the light output to a predefined stand-by light intensity in accordance with a predefined dimming curve as a response to a change from occupancy to non-occupancy (block 404);
- obtaining respective one or more occupancy likelihood coefficients that are descriptive of a likelihood of occupancy in respective locations of said space (block 406); and
- controlling at least one aspect of the light output of the luminaire 120-k, 220-k further in dependence of the one or more occupancy likelihood coefficients (block 408).

The respective operations described with references to the method steps represented by blocks 402 to 408 may be varied or complemented in a number of ways, e.g. according to the examples that pertain to operation and/or characteristics of the luminaires 120-k, 220-k described in the foregoing. Moreover, the method 400 may be complemented with one or more additional steps, the order of carrying out at least some of the method steps may be different from that depicted in Figure 6B and/or some of the method steps may be omitted without departing from the scope of the lighting control approach according to the method 400.

Application of the sensor unit 140, 140-k according to the present disclosure enables improved detection of occupancy and non-occupancy in the space illuminated by the plurality of luminaires 120, 220 via the analysis of sound signals captured in the space, which enables lighting control that facilitates improved user comfort via timely detection of occupants entering the space to allow for switching on the lights in a proactive manner while also facilitating energy-efficient operation via timely detection of the space becoming unoccupied to allow for promptly switching off the lights (to the stand-by light intensity).

Figure 7 illustrates a block diagram of some components of an apparatus 400 that may be employed to implement at least some of the operations described with references to the luminaire control apparatus 126-k or with references to the sensor control apparatus 146, 146-k. The apparatus 400 comprises a processor 410 and a memory 420. The memory 420 may store data and computer program code 425. The apparatus 400 may further comprise communication means 430 for wired or wireless communication with other apparatuses, where the communication means 430 may comprise respective one of the communication portions 123-k, 143, 143-k. The apparatus 400 may further comprise user I/O (input/output) components 440 that may be arranged, together with the processor 410 and a portion of the computer program code 425, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 400 are communicatively coupled to each other via a bus 450 that enables transfer of data and control information between the components.

The memory 420 and a portion of the computer program code 425 stored therein may be further arranged, with the processor 410, to cause the apparatus 400 to perform at least some aspects of operation of the respective one of the luminaire control apparatus 126-k or the sensor control apparatus 146, 146-k. The processor 410 is configured to read from and write to the memory 420. Although the processor 410 is depicted as a respective single component, it may be implemented as respective one or more separate processing components. Similarly, although the memory 420 is depicted as a respective single component, it may be implemented as respective one or more separate components, some or all of which may be integrated/removable and/or may provide permanent / semi-permanent/ dynamic/cached storage.

The computer program code 425 may comprise computer-executable instructions that implement at least some aspects of operation of the respective one of the luminaire control apparatus 126-k or the sensor control apparatus 146, 146-k when loaded into the processor 410. As an example, the computer program code 425 may include a computer program consisting of one or more sequences of one or more instructions. The processor 410 is able to load and execute the computer program by reading the one or more sequences of one or more instructions included therein from the memory 420. The one or more sequences of one or more instructions may be configured to, when executed by the processor 410, cause the apparatus 400 to perform at least some aspects of operation of respective one of the luminaire control apparatus 126-k or the sensor control apparatus 146, 146-k. Hence, the apparatus 400 may comprise at least one processor 410 and at least one memory 420 including the computer program code 425 for one or more programs, the at least one memory 420 and the computer program code 425 configured to, with the at least one processor 410, cause the apparatus 400 to perform at least some aspects of operation of the respective one of the luminaire control apparatus 126-k or the sensor control apparatus 146, 146-k.

The computer program code 425 may be provided e.g. a computer program product comprising at least one computer-readable non-transitory medium having the computer program code 425 stored thereon, which computer program code 425, when executed by the processor 410 causes the apparatus 400 to perform at least some aspects of operation of the respective one of the luminaire control apparatus 126-k or the sensor control apparatus 146, 146-k. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A sensor unit (140, 140-k) comprising:
a sensor portion (142, 142-k) comprising a sound sensor arranged to capture a sound sensor signal that represents sounds in a space illuminated by a plurality of luminaires (120, 220),
**characterized in that** the sensor unit (140, 140-k) comprises
a sensor control portion (144, 144-k) arranged to derive, based on the sound sensor signal, one or more sound parameters, where each sound parameter is descriptive of a respective sound characteristics in said space; and
a learning portion (145, 145-k) arranged to:
receive, from the plurality of luminaires (120, 220) and/or from motion sensor apparatuses arranged in said space, respective remote occupancy state indications that are descriptive of motion in respective locations of said space,
store history data including a history of the one or more sound parameters and respective histories of the occupancy state indications, and
carry out a learning procedure to determine, based on the history data, an occupancy estimation model that is applicable for deriving an occupancy likelihood coefficient based on the one or more sound parameters, where the occupancy likelihood coefficient is descriptive of a likelihood of occupancy in at least one location of said space,
wherein the sensor control portion (144, 144-k) is arranged to apply the determined occupancy estimation model to derive the occupancy likelihood coefficient based on the one or more sound parameters and to carry out one of the following:
control at least one aspect of respective light output of at least one luminaire (120-k, 220-k) of the plurality of luminaires (120, 220) in accordance with the derived occupancy likelihood coefficient, or
transmit lighting control information including the derived occupancy likelihood coefficient to the at least one luminaire (120-k, 220-k) for adjusting at least one aspect of the respective light output of the at least one luminaire (120-k, 220-k).

2. A sensor unit (140, 140-k) according to claim 1, wherein
the sensor portion (142, 142-k) further includes a motion sensor arranged to provide a motion sensor signal that is descriptive of motion in a respective location of said space,
the sensor control portion (144, 144-k) is arranged derive local occupancy state indications based on the motion sensor signal, and
the learning portion (145, 145-k) is arranged to store, into the history data, a history of local occupancy state indications.

3. A sensor unit (140, 140-k) according to any of claims 1 or 2, wherein the occupancy estimation model comprises an artificial neural network, ANN, and wherein the learning portion (145, 145-k) is arranged to carry out the learning procedure via supervised learning based on the history data, where the history of the one or more sound parameters serves as training data and where respective histories of occupancy state indications for one or more locations of said space serve to represent an expected output

4. A sensor unit (140, 140-k) according to claim 3, wherein one of the following applies:
respective histories of occupancy state indications for two or more locations of said space serve to represent the expected output, the learning procedure thereby providing a general occupancy estimation model that is applicable for deriving a general occupancy likelihood coefficient that pertains to a plurality of locations in said space;
a history of occupancy state indications for a certain location of said space serves to represent the expected output, the learning procedure thereby providing a location-specific occupancy estimation model that is applicable for deriving a location-specific occupancy likelihood coefficient that pertains to the respective location of said space.

5. A sensor unit (140, 140-k) according to any of claims 1 to 4, wherein said sound characteristic include one or more of the following characteristics within a sound analysis window of predefined duration:
an average sound level over the sound analysis window,
a sound level variation over the sound analysis window,
a peak sound level within the sound analysis window,
a first sound feature that is descriptive of one of presence or absence of sound content at one or more predefined frequencies within the sound analysis window,
a second sound feature that is descriptive of relative magnitude of sound content at the one or more predefined frequencies within the sound analysis window.

6. A sensor unit (140, 140-k) according to any of claims 1 to 5, wherein the sensor control portion (144, 144-k) is arranged to control the at least one aspect of the respective light output of the at least one luminaire (120-k, 220-k) in accordance with the derived occupancy likelihood coefficient via carrying out the following:
determining, based on the derived occupancy likelihood coefficient, a lighting control instruction for adjusting the respective light output of the at least one luminaire (120-k, 220-k); and
transmitting a lighting control command including the determined lighting control instruction to the at least one luminaire (120-k, 220-k).

7. A sensor unit (140, 140-k) according to claim 6, wherein determining the lighting control instruction comprises one of the following:
determining, in response to the derived occupancy likelihood coefficient exceeding a first occupancy likelihood threshold, a lighting control instruction that instructs the at least one luminaire (120-k, 220-k) to temporarily increase a predefined stand-by light intensity to an intermediate light intensity,
determining, in response to the derived occupancy likelihood coefficient exceeding a first occupancy likelihood threshold, a lighting control instruction that instructs the at least one luminaire (120-k, 220-k) to temporarily extend the duration of a dimming curve applied upon adjusting the light output of the at least one luminaire (120-k, 220-k) to the stand-by light intensity,
determining, in response to the derived occupancy likelihood coefficient being below a second occupancy likelihood threshold that is smaller than the first occupancy likelihood threshold, a lighting control instruction that instructs the at least one luminaire (120-k, 220-k) to temporarily shorten the duration of the dimming curve applied upon adjusting the light output of the at least one luminaire (120-k, 220-k) to the stand-by light intensity,

8. A method (300) for lighting control, the method (300) comprising:
deriving (302), based on a sound sensor signal that represents sounds in a space illuminated by a plurality of luminaires (120, 220), one or more sound parameters, where each sound parameter is descriptive of a respective sound characteristics in said space,
**characterized in that** the method (300) comprises:
receiving (304), from the plurality of luminaires (120, 220) and/or from motion sensor apparatuses arranged in said space, respective remote occupancy state indications that are descriptive of motion in respective locations of said space;
storing (306) history data including a history of the one or more sound parameters and respective histories of the occupancy state indications;
carrying out (308) a learning procedure to determine, based on the history data, an occupancy estimation model that is applicable for deriving an occupancy likelihood coefficient based on the one or more sound parameters, where the occupancy likelihood coefficient is descriptive of a likelihood of occupancy in at least one location of said space; and
applying (310) the determined occupancy estimation model to derive the occupancy likelihood coefficient based on the one or more sound parameters and carrying out one of the following:
controlling at least one aspect of respective light output of at least one luminaire (120-k, 220-k) of the plurality of luminaires (120, 220) in accordance with the derived occupancy likelihood coefficient, or
transmitting lighting control information including the derived occupancy likelihood coefficient to the at least one luminaire (120-k, 220-k) for adjusting at least one aspect of the respective light output of the at least one luminaire (120-k, 220-k).

9. A computer program comprising computer readable program code configured to cause performing of the method according to claim 8 when said program code is run on one or more computing apparatuses.

## Patentansprüche

1. Sensoreinheit (140, 140-k), die Folgendes umfasst:
einen Sensorteil (142, 142-k), der einen Tonsensor umfasst, der dazu eingerichtet ist, ein Tonsensorsignal zu erfassen, das Töne in einem Raum repräsentiert, der durch mehrere Leuchten (120, 220) beleuchtet wird,
**dadurch gekennzeichnet, dass** die Sensoreinheit (140, 140-k) Folgendes umfasst
einen Sensorsteuerteil (144, 144-k), der dazu eingerichtet ist, basierend auf dem Tonsensorsignal einen oder mehrere Tonparameter abzuleiten, wobei jeder Tonparameter eine jeweilige Toncharakteristik in dem Raum beschreibt; und
einen Lernteil (145, 145-k), der zu Folgendem eingerichtet ist:
Empfangen, von den mehreren Leuchten (120, 220) und/oder von Bewegungssensoreinrichtungen, die in dem Raum angeordnet sind, jeweiliger Fernbelegungszustandsindikationen, die eine Bewegung an jeweiligen Orten des Raums beschreiben,
Speichern historischer Daten, einschließlich einer Historie des einen oder der mehreren Tonparameter und jeweiliger Historien der Belegungszustandsindikationen, und
Ausführen einer Lernprozedur, um basierend auf den historischen Daten ein Belegungsschätzungsmodell zu bestimmen, das zum Ableiten eines Belegungswahrscheinlichkeitskoeffizienten basierend auf dem einen oder den mehreren Tonparametern anwendbar ist, wobei der Belegungswahrscheinlichkeitskoeffizient eine Wahrscheinlichkeit einer Belegung an wenigstens einem Ort des Raums beschreibt,
wobei der Sensorsteuerteil (144, 144-k) dazu eingerichtet ist, das bestimmte Belegungsschätzungsmodell anzuwenden, um den Belegungswahrscheinlichkeitskoeffizienten basierend auf dem einen oder den mehreren Tonparametern abzuleiten, und eines des Folgenden auszuführen:
Steuern wenigstens eines Aspekts einer jeweiligen Lichtausgabe wenigstens einer Leuchte (120-k, 220-k) der mehreren Leuchten (120, 220) gemäß dem abgeleiteten Belegungswahrscheinlichkeitskoeffizienten oder Übertragen von Beleuchtungssteuerinformationen einschließlich des abgeleiteten Belegungswahrscheinlichkeitskoeffizienten an die wenigstens eine Leuchte (120-k, 220-k) zum Anpassen wenigstens eines Aspekts der jeweiligen Lichtausgabe der wenigstens einen Leuchte (120-k, 220-k).

2. Sensoreinheit (140, 140-k) nach Anspruch 1, wobei der Sensorteil (142,142-k) ferner einen Bewegungssensor beinhaltet, der dazu eingerichtet ist, ein Bewegungssensorsignal bereitzustellen, das eine Bewegung an einem jeweiligen Ort des Raums beschreibt,
der Sensorsteuerteil (144, 144-k) dazu eingerichtet ist, lokale Belegungszustandsindikationen basierend auf dem Bewegungssensorsignal abzuleiten, und
der Lernteil (145,145-k) dazu eingerichtet ist, eine Historie lokaler Belegungszustandsindikationen in den historischen Daten zu speichern.

3. Sensoreinheit (140, 140-k) nach einem der Ansprüche 1 oder 2, wobei das Belegungsschätzungsmodell ein künstliches neuronales Netzwerk, ANN, umfasst und wobei der Lernteil (145, 145-k) dazu eingerichtet ist, die Lernprozedur über überwachtes Lernen basierend auf den historischen Daten auszuführen, wobei die Historie des einen oder der mehreren Tonparameter als Trainingsdaten dient und wobei jeweilige Historien von Belegungszustandsindikationen für einen oder mehrere Orte des Raums dazu dienen, eine erwartete Ausgabe zu repräsentieren.

4. Sensoreinheit (140, 140-k) nach Anspruch 3, wobei eines des Folgenden zutrifft:
jeweilige Historien von Belegungszustandsindikationen für zwei oder mehr Orte des Raums dienen dazu, die erwartete Ausgabe zu repräsentieren, wobei die Lernprozedur dadurch ein allgemeines Belegungsschätzungsmodell bereitstellt, das zum Ableiten eines allgemeinen Belegungswahrscheinlichkeitskoeffizienten anwendbar ist, der mehrere Orte in dem Raum betrifft;
eine Historie von Belegungszustandsindikationen für einen gewissen Ort des Raumes dient dazu, die erwartete Ausgabe zu repräsentieren, wobei die Lernprozedur dadurch ein ortsspezifisches Belegungsschätzungsmodell bereitstellt, das zum Ableiten eines ortsspezifischen Belegungswahrscheinlichkeitskoeffizienten anwendbar ist, der den jeweiligen Ort des Raumes betrifft.

5. Sensoreinheit (140, 140-k) nach einem der Ansprüche 1 bis 4, wobei die Toncharakteristik eine oder mehrere der folgenden Charakteristiken innerhalb eines Tonanalysefensters mit vordefinierter Dauer beinhaltet:
einen durchschnittlichen Tonpegel über das Tonanalysefenster,
eine Tonpegeländerung über das Tonanalysefenster,
einen Spitzentonpegel innerhalb des Tonanalysefensters,
ein erstes Tonmerkmal, das eines von Vorhandensein oder Nichtvorhandensein eines Toninhalts bei einer oder mehreren vordefinierten Frequenzen innerhalb des Tonanalysefensters beschreibt,
ein zweites Tonmerkmal, das einen relativen Betrag eines Toninhalts bei einer oder mehreren vordefinierten Frequenzen innerhalb des Tonanalysefensters beschreibt.

6. Sensoreinheit (140, 140-k) nach einem der Ansprüche 1 bis 5, wobei der Sensorsteuerteil (144, 144-k) dazu eingerichtet ist, den wenigstens einen Aspekt der jeweiligen Lichtausgabe der wenigstens einen Leuchte (120-k, 220-k) gemäß dem abgeleiteten Belegungswahrscheinlichkeitskoeffizienten durch Ausführen des Folgenden zu steuern:
Bestimmen, basierend auf dem abgeleiteten Belegungswahrscheinlichkeitskoeffizienten, einer Beleuchtungssteueranweisung zum Anpassen der jeweiligen Lichtausgabe der wenigstens einen Leuchte (120-k, 220-k); und
Übertragen eines Beleuchtungssteuerbefehls einschließlich des bestimmten Beleuchtungssteuerbefehls an die wenigstens eine Leuchte (120-k, 220-k).

7. Sensoreinheit (140, 140-k) nach Anspruch 6, wobei das Bestimmen der Beleuchtungssteueranweisung eines des Folgenden umfasst:
Bestimmen, als Reaktion darauf, dass der abgeleitete Belegungswahrscheinlichkeitskoeffizient eine erste Belegungswahrscheinlichkeitsschwelle überschreitet, einer Beleuchtungssteueranweisung, die die wenigstens eine Leuchte (120-k, 220-k) dazu anweist, eine vordefinierte Standby-Lichtintensität vorübergehend auf eine Zwischenlichtintensität zu erhöhen,
Bestimmen, als Reaktion darauf, dass der abgeleitete Belegungswahrscheinlichkeitskoeffizient eine erste Belegungswahrscheinlichkeitsschwelle überschreitet, einer Beleuchtungssteueranweisung, die die wenigstens eine Leuchte (120-k, 220-k) dazu anweist, die Dauer einer Dimmkurve, die beim Anpassen der Lichtausgabe der wenigstens einen Leuchte (120-k, 220-k) an die Standby-Lichtintensität angewandt wird, vorübergehend zu verlängern,
Bestimmen, als Reaktion darauf, dass der abgeleitete Belegungswahrscheinlichkeitskoeffizient unter einer zweiten Belegungswahrscheinlichkeitsschwelle liegt, die kleiner als die erste Belegungswahrscheinlichkeitsschwelle ist, einer Beleuchtungssteueranweisung, die die wenigstens eine Leuchte (120-k, 220-k) dazu anweist, die Dauer der Dimmkurve, die beim Anpassen der Lichtausgabe der wenigstens einen Leuchte (120-k, 220-k) an die Standby-Lichtintensität angewandt wird, vorübergehend zu verkürzen.

8. Verfahren (300) zur Beleuchtungssteuerung, wobei das Verfahren (300) Folgendes umfasst:
Ableiten (302), basierend auf einem Tonsensorsignal, das Töne in einem Raum repräsentiert, der durch mehrere Leuchten (120, 220) beleuchtet wird, eines oder mehrerer Tonparameter, wobei jeder Tonparameter eine jeweilige Toncharakteristik in dem Raum beschreibt,
**dadurch gekennzeichnet, dass** das Verfahren (300) Folgendes umfasst:
Empfangen (304), von den mehreren Leuchten (120, 220) und/oder von Bewegungssensoreinrichtungen, die in dem Raum angeordnet sind, jeweiliger Fernbelegungszustandsindikationen, die eine Bewegung an jeweiligen Orten des Raums beschreiben;
Speichern (306) historischer Daten, einschließlich einer Historie des einen oder der mehreren Tonparameter und jeweiliger Historien der Belegungszustandsindikationen;
Ausführen (308)einer Lernprozedur, um basierend auf den historischen Daten ein Belegungsschätzungsmodell zu bestimmen, das zum Ableiten eines Belegungswahrscheinlichkeitskoeffizienten basierend auf dem einen oder den mehreren Tonparametern anwendbar ist, wobei der Belegungswahrscheinlichkeitskoeffizient eine Wahrscheinlichkeit einer Belegung an wenigstens einem Ort des Raums beschreibt; und
Anwenden (310) des bestimmten Belegungsschätzungsmodells, um den Belegungswahrscheinlichkeitskoeffizienten basierend auf dem einen oder den mehreren Tonparametern abzuleiten, und Ausführen eines des Folgenden:
Steuern wenigstens eines Aspekts einer jeweiligen Lichtausgabe wenigstens einer Leuchte (120-k, 220-k) der mehreren Leuchten (120, 220) gemäß dem abgeleiteten Belegungswahrscheinlichkeitskoeffizienten, oder
Übertragen von Beleuchtungssteuerinformationen einschließlich des abgeleiteten Belegungswahrscheinlichkeitskoeffizienten an die wenigstens eine Leuchte (120-k, 220-k) zum Anpassen wenigstens eines Aspekts der jeweiligen Lichtausgabe der wenigstens einen Leuchte (120-k, 220-k).

9. Computerprogramm, das computerlesbaren Programmcode umfasst, der dazu konfiguriert ist, das Durchführen des Verfahrens nach Anspruch 8 zu bewirken, wenn der Programmcode auf einer oder mehreren Recheneinrichtungen ausgeführt wird.

## Revendications

1. Unité de capteurs (140, 140-k) comprenant :
une partie capteurs (142, 142-k) comprenant un capteur de sons agencé pour capter un signal de capteur de sons qui représente des sons dans un espace éclairé par une pluralité de luminaires (120, 220),
l'unité de capteurs (140, 140-k) étant **caractérisée en ce qu'**elle comprend
une partie de commande de capteurs (144, 144-k) agencée pour dériver, sur la base du signal de capteur de sons, un ou plusieurs paramètres de sons, chaque paramètre de sons décrivant une caractéristique de sons respective dans ledit espace ; et
une partie d'apprentissage (145, 145-k) agencée pour :
recevoir, depuis la pluralité de luminaires (120, 220) et/ou depuis des appareils capteurs de mouvement agencés dans ledit espace, des indications distantes respectives d'état d'occupation qui décrivent un mouvement à des endroits respectifs dudit espace,
stocker des données d'historiques comportant un historique du ou des paramètres de sons et des historiques respectifs des indications d'état d'occupation, et
mettre en œuvre une procédure d'apprentissage afin de déterminer, sur la base des données d'historiques, un modèle d'estimation d'occupation applicable pour dériver un coefficient de probabilité d'occupation sur la base du ou des paramètres de sons, le coefficient de probabilité d'occupation décrivant une probabilité d'occupation à au moins un endroit dudit espace,
la partie de commande de capteurs (144, 144-k) étant agencée pour appliquer le modèle d'estimation d'occupation déterminé afin de dériver le coefficient de probabilité d'occupation sur la base du ou des paramètres de sons et pour mettre en œuvre l'une des opérations suivantes :
commander au moins un aspect d'une émission lumineuse respective d'au moins un luminaire (120-k, 220-k) de la pluralité de luminaires (120, 220) en fonction du coefficient de probabilité d'occupation dérivé, ou
transmettre des informations de commande d'éclairage comportant le coefficient de probabilité d'occupation dérivé à l'au moins un luminaire (120-k, 220-k) afin d'ajuster au moins un aspect de l'émission lumineuse respective de l'au moins un luminaire (120-k, 220-k).

2. Unité de capteurs (140, 140-k) selon la revendication 1, dans laquelle
la partie capteurs (142,142-k) comporte en outre un capteur de mouvement agencé pour fournir un signal de capteur de mouvement décrivant un mouvement à un endroit respectif dudit espace,
la partie de commande de capteurs (144, 144-k) est agencée pour dériver des indications locales d'état d'occupation sur la base du signal de capteur de mouvement, et
la partie d'apprentissage (145,145-k) est agencée pour stocker, dans les données d'historiques, un historique d'indications locales d'état d'occupation.

3. Unité de capteurs (140, 140-k) selon l'une quelconque des revendications 1 ou 2, dans laquelle le modèle d'estimation d'occupation comprend un réseau de neurones artificiels, ANN, et dans laquelle la partie d'apprentissage (145, 145-k) est agencée pour mettre en œuvre la procédure d'apprentissage par apprentissage supervisé sur la base des données d'historiques, l'historique du ou des paramètres de sons servant de données d'entraînement et des historiques respectifs d'indications d'état d'occupation pour un ou plusieurs endroits dudit espace servant à représenter une sortie attendue.

4. Unité de capteurs (140, 140-k) selon la revendication 3, dans laquelle l'une des situations suivantes s'applique :
des historiques respectifs d'indications d'état d'occupation pour au moins deux endroits dudit espace servent à représenter la sortie attendue, la procédure d'apprentissage fournissant ainsi un modèle d'estimation d'occupation général qui est applicable pour dériver un coefficient de probabilité d'occupation général relatif à une pluralité d'endroits dans ledit espace ;
un historique d'indications d'état d'occupation pour un endroit particulier dudit espace sert à représenter la sortie attendue, la procédure d'apprentissage fournissant ainsi un modèle d'estimation d'occupation spécifique à un endroit qui est applicable pour dériver un coefficient de probabilité d'occupation spécifique à un endroit relatif à l'endroit respectif dudit espace.

5. Unité de capteurs (140, 140-k) selon l'une quelconque des revendications 1 à 4, dans laquelle ladite caractéristique de sons comporte une ou plusieurs des caractéristiques suivantes au sein d'une fenêtre d'analyse de sons d'une durée prédéfinie :
un niveau sonore moyen sur la fenêtre d'analyse de sons, une variation du niveau sonore sur la fenêtre d'analyse de sons,
un niveau sonore maximal au sein de la fenêtre d'analyse de sons,
un premier attribut sonore décrivant la présence ou bien l'absence d'un contenu sonore à une ou plusieurs fréquences prédéfinies au sein de la fenêtre d'analyse de sons,
un deuxième attribut sonore décrivant l'amplitude relative d'un contenu sonore à la ou aux fréquences prédéfinies au sein de la fenêtre d'analyse de sons.

6. Unité de capteurs (140, 140-k) selon l'une quelconque des revendications 1 à 5, dans laquelle la partie de commande de capteurs (144, 144-k) est agencée pour commander l'au moins un aspect de l'émission lumineuse respective de l'au moins un luminaire (120-k, 220-k) en fonction du coefficient de probabilité d'occupation dérivé par mise en œuvre des opérations suivantes :
détermination, sur la base du coefficient de probabilité d'occupation dérivé, d'une instruction de commande d'éclairage afin d'ajuster l'émission lumineuse respective de l'au moins un luminaire (120-k, 220-k) ; et
transmission d'un ordre de commande d'éclairage comportant l'instruction de commande d'éclairage déterminée à l'au moins un luminaire (120-k, 220-k).

7. Unité de capteurs (140, 140-k) selon la revendication 6, dans laquelle la détermination de l'instruction de commande d'éclairage comprend l'une des opérations suivantes :
détermination, dès lors que le coefficient de probabilité d'occupation dérivé dépasse un premier seuil de probabilité d'occupation, d'une instruction de commande d'éclairage qui donne instruction à l'au moins un luminaire (120-k, 220-k) d'augmenter temporairement une intensité lumineuse de veille prédéfinie à une intensité lumineuse intermédiaire,
détermination, dès lors que le coefficient de probabilité d'occupation dérivé dépasse un premier seuil de probabilité d'occupation, d'une instruction de commande d'éclairage qui donne instruction à l'au moins un luminaire (120-k, 220-k) de prolonger temporairement la durée d'une courbe de gradation appliquée lors de l'ajustement de l'émission lumineuse de l'au moins un luminaire (120-k, 220-k) à l'intensité lumineuse de veille,
détermination, dès lors que le coefficient de probabilité d'occupation dérivé est inférieur à un deuxième seuil de probabilité d'occupation qui est plus faible que le premier seuil de probabilité d'occupation, d'une instruction de commande d'éclairage qui donne instruction à l'au moins un luminaire (120-k, 220-k) de raccourcir temporairement la durée de la courbe de gradation appliquée lors de l'ajustement de l'émission lumineuse de l'au moins un luminaire (120-k, 220-k) à l'intensité lumineuse de veille.

8. Procédé (300) de commande d'éclairage, le procédé (300) comprenant :
la dérivation (302), sur la base d'un signal de capteur de sons qui représente des sons dans un espace éclairé par une pluralité de luminaires (120, 220), d'un ou de plusieurs paramètres de sons, chaque paramètre de sons décrivant une caractéristique de sons respective dans ledit espace,
le procédé (300) étant **caractérisé en ce qu'**il comprend :
la réception (304), depuis la pluralité de luminaires (120, 220) et/ou depuis des appareils capteurs de mouvement agencés dans ledit espace, d'indications distantes respectives d'état d'occupation qui décrivent un mouvement à des endroits respectifs dudit espace ;
le stockage (306) de données d'historiques comportant un historique du ou des paramètres de sons et des historiques respectifs des indications d'état d'occupation ;
la mise en œuvre (308) d'une procédure d'apprentissage afin de déterminer, sur la base des données d'historiques, un modèle d'estimation d'occupation applicable pour dériver un coefficient de probabilité d'occupation sur la base du ou des paramètres de sons, le coefficient de probabilité d'occupation décrivant une probabilité d'occupation à au moins un endroit dudit espace ; et
l'application (310) du modèle d'estimation de l'occupation déterminé afin de dériver le coefficient de probabilité d'occupation sur la base du ou des paramètres de sons, et la mise en œuvre de l'une des opérations suivantes :
commande d'au moins un aspect d'une émission lumineuse respective d'au moins un luminaire (120-k, 220-k) de la pluralité de luminaires (120, 220) en fonction du coefficient de probabilité d'occupation dérivé, ou
transmission d'informations de commande d'éclairage comportant le coefficient de probabilité d'occupation dérivé à l'au moins un luminaire (120-k, 220-k) afin d'ajuster au moins un aspect de l'émission lumineuse respective de l'au moins un luminaire (120-k, 220-k).

9. Programme d'ordinateur comprenant un code de programme lisible par ordinateur configuré pour entraîner la réalisation du procédé selon la revendication 8 lorsque ledit code de programme est exécuté sur un ou plusieurs appareils informatiques.
